# FASCICULE DE BREVET EUROPEEN

(11) **EP 4 158 221 B1**
(45) Date de publication et mention de la délivrance du brevet: **26.06.2024**
(21) Numéro de dépôt: 21728582.4
(22) Date de dépôt: 29.05.2021
(51) Int. Cl.: F16G 11/04, F16G 3/08, F16G 11/06, F16G 3/10

(54) **DISPOSITIF DE JONCTION DE BANDE TRANSPORTEUSE A CÂBLES MUNI D'ELEMENTS DE BLOCAGE DE CÂBLE**
VERBINDUNGSVORRICHTUNG FÜR KABELFÖRDERBAND MIT KABELVERRIEGELUNGSELEMENTEN
CABLE CONVEYOR BELT JUNCTION DEVICE PROVIDED WITH CABLE LOCKING ELEMENTS

(30) Priorité: 29.05.2020 FR 2005721
(43) Date de publication de la demande: 05.04.2023
(73) Titulaire: FP Business Invest, 42400 Saint-Chamond (FR)
(72) Inventeur: TAVERNIER, Bernard, 42500 Le Chambon Feugerolles (FR); GUILLEMET, Frédéric, 69300 Caluire et Cuire (FR)
(74) Mandataire: Bringer IP
(86) Numéro de dépôt international: PCT/EP2021/064465
(87) Numéro de publication internationale: WO 2021/240008

(56) Documents cités:
- WO-A1-2019/071363
- BE-A- 531 462
- DE-U1- 8 801 165
- GB-A- 2 118 583
- GB-A- 191 517 364

## Description

### DOMAINE TECHNIQUE DE L'INVENTION

L'invention concerne, de façon générale, le domaine technique des éléments de blocage d'au moins un câble, tels que des serre-câbles ou bloque-câbles.

L'invention se rapporte plus spécifiquement à un élément de blocage de câble(s) destiné à être fixé sur au moins une portion d'au moins un câble, l'élément de blocage comprenant deux appuis configurés pour enserrer la portion du câble, en la bloquant.

### ÉTAT DE LA TECHNIQUE ANTÉRIEURE

On connaît de l'art antérieur de nombreuses solutions pour assurer la fixation d'un élément sur un câble ou relier localement plusieurs câbles entre eux. Un serre-câble par exemple est généralement utilisé pour unir deux portions de plusieurs câbles distincts, généralement deux, ou pour unir deux portions d'un même câble, par exemple pour réaliser une boucle fermée avec le câble correspondant. Des éléments de fixation sont aussi utilisés pour venir s'arrimer sur une seule portion d'un câble, par exemple pour y fixer un accessoire, une telle configuration dépendant généralement de l'utilisation souhaitée. Il peut s'agir par exemple dans ce cas d'une poignée de préhension d'un câble pour assurer sa manutention.

Ces éléments de fixation sont configurés de sorte à serrer au moins une portion de chacun des câbles entre deux appuis, lesquels sont contraints l'un par rapport à l'autre par un moyen de serrage tel qu'un boulon.

Un inconvénient de ces éléments de fixation est que dans certains usages, un effort de traction longitudinal trop important sur le câble peut provoquer un glissement relatif du câble par rapport aux appuis des éléments de fixation. Dans ce cas, il est connu de dimensionner l'élément de fixation pour assurer un serrage suffisant du ou des câbles pour éviter son glissement relatif le long du câble une fois soumis aux efforts de traction. Ce type de dimensionnement amène généralement à concevoir des solutions volumineuses et incompatibles avec certaines applications. On peut citer par exemple comme application nécessitant une jonction de câble(s) de gabarit réduit et de résistance importante, celle des jonctions de bande transporteuse renforcée par une armature à câbles.

On pourrait également envisager de configurer des surfaces de contact desdits appuis de sorte qu'ils présentent un certain relief ou une rugosité importante pour augmenter les efforts de friction, et donc l'adhérence entre le câble et l'interface de serrage des appuis des éléments de fixation. De telles configurations sont toutefois en pratique de nature à dégrader plus rapidement le câble localement au niveau de l'élément de fixation, ce qui est particulièrement problématique pour certains usages où on cherche à améliorer la qualité de la fixation tout en réduisant au maximum les opérations de maintenance visant à remplacer un câble. Par ailleurs, ces configurations ne permettent pas de résoudre le problème du volume des éléments de fixation suivant l'application souhaitée.

Dans certaines applications également, la fixation de câble(s) nécessite une préparation de la ou des portion(s) de câble(s) à fixer, qui sont parfois longues et fastidieuses. Dans le domaine des jonctions de deux extrémités d'une bande transporteuse renforcée par une armature à câbles, il est généralement nécessaire de mobiliser des personnes qualifiées pour procéder à des opérations de dégarnissage des câbles au voisinage des portions d'extrémité de la bande transporteuse à relier, ce qui est très long à mettre en oeuvre. Par ailleurs, une fois la jonction effectuée, les câbles joints doivent ensuite être noyés dans la matière constitutive du corps de la bande et une opération de vulcanisation est effectuée pour finaliser la jonction, cette matière constitutive étant une matière souple et élastique, par exemple en caoutchouc vulcanisé, ou en une matière de synthèse telle que du polyuréthane.

La mise en oeuvre de ces étapes est particulièrement contraignante. Tout d'abord, la multiplicité des opérations nécessite une durée de maintenance très longue, supérieure à une journée, voire plusieurs jours. De plus, les conditions d'utilisation très sévères de la bande transporteuse exigent un travail soigneux lors de la réalisation des jonctions qui ne peut être fait que par des spécialistes très qualifiés. Compte tenu de la durée de maintenance, plusieurs équipes de personnes doivent se relayer, chacune de ces personnes devant être qualifiée. Par ailleurs, ces jonctions exigent que ce travail soit exécuté sur une longueur très importante, de plusieurs mètres de long, généralement entre 5 et 10 mètres. L'opération de vulcanisation devant être effectuée en une seule étape sur toute la longueur de la jonction, il est nécessaire de pouvoir disposer une presse à vulcaniser sur place, généralement sur le lieu où la jonction doit être réparée, et de l'adapter à la longueur de la jonction. Les temps d'exécution et les frais correspondants sont alors très importants.

Les demandes n° GB 2118583 A, n° DE 8801165 U1, n° WO 2019/071363 A1, n° BE 531462 A et n° GB 17364 A décrivent des solutions de l'art antérieur.

Il existe donc un besoin important, pour un homme du métier, de parvenir à une solution plus efficace que celles proposées par l'art antérieur pour parvenir à un élément de blocage de câble destiné à être fixé à au moins une portion d'au moins un câble, qui soit particulièrement résistant et de faible gabarit, et participant de préférence à une jonction améliorée de deux extrémités d'une bande transporteuse du type comportant un corps en matériau flexible à l'intérieur duquel est logé un renfort comprenant des câbles.

### EXPOSE DE L'INVENTION

L'objet de la présente invention est de proposer une solution qui réponde à tout ou partie de ces problèmes techniques, et notamment à proposer une solution présentant des caractéristiques améliorées de résistance à la traction, garantissant un blocage de l'élément de fixation par rapport au câble, tout en réduisant les risques d'usure prématurée du câble, et présentant un gabarit relativement réduit.

A cet effet, l'invention concerne un élément de blocage de câble destiné à être fixé à au moins une portion d'au moins un câble, l'élément de blocage comprenant au moins un appui d'un premier côté et un appui d'un deuxième côté opposé au premier côté, les appuis étant configurés pour enserrer au moins la portion du câble, les appuis présentant chacun au moins une gorge, délimitant ensemble au moins une partie d'une cavité traversante pour recevoir au moins la portion du câble traversant l'élément de blocage entre une ouverture d'entrée et une ouverture de sortie alignées suivant un axe de référence, l'élément de blocage étant caractérisé en ce que la cavité recevant la portion du câble comporte une partie intermédiaire élargie, entre des portions d'ouvertures d'entrée et de sortie, élargie radialement par rapport à la portion d'ouverture d'entrée et à la portion d'ouverture de sortie, l'élément de blocage comprenant au moins un organe d'ancrage configuré pour occuper au moins partiellement une portion de la partie intermédiaire élargie de la cavité située dans l'alignement des ouvertures d'entrée et de sortie, de sorte à créer localement une déformation radiale de la section de la portion du câble.

Grâce à une telle combinaison de caractéristiques, une ou plusieurs portion(s) de câble(s) sont enserrées entre les appuis, et pour une portion de câble donnée, il est possible de créer localement une déformation radiale de la section de la portion de câble donnée, par l'introduction de l'organe d'ancrage. Cette déformation peut alors augmenter localement le gabarit du câble déformé par l'organe d'ancrage qui est contenu dans la zone élargie de la partie intermédiaire, elle-même encadrée axialement par deux portions de section réduite, l'une vers l'ouverture d'entrée et l'autre vers l'ouverture de sortie du câble. Les portions d'ouvertures forment chacune une portion de la cavité débouchante vers, ou du côté de, l'ouverture associée de l'élément de blocage. Dans une position bloquée de la portion de câble dans l'élément de blocage, le câble lui-même participe au blocage qui grâce à sa déformation radiale et par conséquent du fait de son gabarit, vient en appui contre ces sections réduites et est bloqué entre les portions d'ouvertures d'entrée et de sortie.

Suivant un mode de réalisation, l'élément de blocage comprend au moins un moyen de serrage pour assurer un serrage des deux appuis l'un par rapport à l'autre. De préférence, le moyen de serrage comprend au moins une vis et/ou un crampon et/ou un rivet et/ou un sertissage. De manière générale, le ou les moyen(s) de serrage peuvent être amovibles, ce qui est le cas notamment pour la vis et le crampon.

Suivant un mode de réalisation, l'élément de blocage est configuré pour enserrer au moins une première portion et une deuxième portion d'un même câble, ou de deux câbles distincts.

Suivant un mode de réalisation, le moyen de serrage comprend l'organe d'ancrage de sorte que l'organe d'ancrage participe au serrage des deux appuis l'un par rapport à l'autre. De cette manière on minimise l'encombrement de l'élément de blocage en mutualisant les deux fonctions de serrage et d'ancrage grâce à un seul et même moyen.

Suivant un mode de réalisation, les appuis sont formés d'un seul tenant. Dans une telle configuration, on obtient une portion de câble entourée continûment par les appuis. Dans ce cas les appuis peuvent être discontinus et répartis sur au moins deux zones en regard l'une par rapport à l'autre par exemple, ou bien liés ensemble de sorte à former un serrage circonférentiel.

Suivant un mode de réalisation, l'organe d'ancrage comprend une portion de tige configurée pour pénétrer dans la portion du câble.

Suivant un mode de réalisation, l'organe d'ancrage comprend de préférence au moins un crampon et/ou une vis et/ou un rivet et/ou un pion.

Suivant un mode de réalisation, la portion du câble comporte une structure du type comprenant des fils, l'organe d'ancrage comprenant une extrémité distale, opposée à une tête, munie d'une pointe de sorte à pénétrer au moins en partie dans le câble en séparant les fils de la structure du câble. L'utilisation d'une pointe permet de faciliter l'introduction de l'organe d'ancrage à travers la portion du câble correspondante, sans nécessiter l'utilisation d'où outillage spécifique. Cette pointe peut être usinée, par exemple pliée, ou sectionnée après le positionnement de l'organe d'ancrage, suivant la configuration de l'élément de blocage.

Suivant un mode de réalisation, au moins un premier des deux appuis comporte au moins un trou traversant débouchant dans la partie intermédiaire élargie de la cavité pour permettre à l'organe d'ancrage de pénétrer dans la partie intermédiaire élargie de la cavité.

Suivant un mode de réalisation, le premier des deux appuis comporte au moins une première interface, par exemple une cuvette ou fraisure, apte à loger une tête de l'un des organes d'ancrage, et en ce qu'un deuxième des deux appuis comporte au moins une deuxième interface avec laquelle est apte à coopérer un tronçon d'ancrage dudit organe d'ancrage, par exemple un taraudage. Bien entendu, ces première et deuxième interfaces sont adaptées à l'organe d'ancrage associé. Cette caractéristique est d'autant plus avantageuse lorsque l'organe d'ancrage forme, ou constitue, le moyen de serrage lui-même, les interfaces permettant d'assurer la bonne tenue de l'organe d'ancrage et du moyen de serrage.

Suivant un mode de réalisation, la portion d'ouverture d'entrée et/ou la portion d'ouverture de sortie présentent localement un rétrécissement de section, configuré de préférence de sorte que ce rétrécissement présente un diamètre strictement inférieur au diamètre d'une enveloppe cylindrique du câble. Une telle caractéristique vise à assurer un serrage de la portion du câble à l'entrée et la sortie de l'élément de blocage à travers les portions d'ouvertures. Un tel rétrécissement de section peut être continu ou discontinue sur le pourtour de l'enveloppe cylindrique du câble. Une telle discontinuité peut être formée par exemple par au moins une, voire une succession circonférentielle de, dent(s) susceptible(s) de pénétrer dans la portion de câble donnée. Un rétrécissement peut être continu lorsqu'il est formé par exemple par une collerette ou une portion de collerette s'étendant circonférentiellement par rapport à ladite portion de câble. Un tel rétrécissement peut également être formé par une pièce rapportée qui viendrait coiffer localement une partie de la portion du câble dans la cavité, par exemple au niveau des ouvertures d'entrée et/ou de sortie, ou de ses portions d'ouvertures d'entrée et/ou de sortie.

Suivant un mode de réalisation, la partie intermédiaire élargie de la cavité présente un élargissement radial dans un plan orthogonal à un axe d'une portion de tige de l'organe d'ancrage configurée pour pénétrer dans le câble. Cet axe correspond de préférence à l'axe d'insertion de l'organe d'ancrage à travers la cavité, de préférence à travers la partie intermédiaire élargie. L'élargissement radial est de préférence supérieur ou égal à 10%, de préférence encore supérieur ou égal à 25% d'un diamètre du câble, et de préférence inférieur ou égal à 50%, de préférence encore inférieur à 40% du diamètre du câble, de chaque côté par rapport à la cavité.

Suivant un mode de réalisation, les portions d'ouvertures d'entrée et de sortie de la cavité recevant le câble présentent une forme délimitant en partie une enveloppe cylindrique configurée pour coopérer avec une enveloppe cylindrique du câble. De préférence dans ce cas, les portions d'ouvertures d'entrée et de sortie de la cavité s'étendant chacune axialement suivant une longueur supérieure ou égale à la longueur axiale de la partie intermédiaire élargie de la cavité.

Selon un second aspect, l'invention concerne également un assemblage d'au moins deux éléments de blocage de câbles, caractérisé en ce qu'il comprend au moins un premier et un deuxième éléments de blocage présentant tout ou partie des caractéristiques décrites ci-avant, les premier et deuxième éléments de blocage étant reliés entre eux par des moyens d'assemblage.

Suivant un mode de réalisation, le premier et le deuxième éléments de blocage sont associés deux à deux de sorte à former chacun des appuis d'un troisième élément de blocage présentant tout ou partie des caractéristiques d'un élément de blocage tel que décrit ci-avant. De préférence dans ce cas, les moyens d'assemblage comprennent le ou les moyen(s) de serrage pour assurer un serrage de ces deux appuis l'un par rapport à l'autre. Dans ce cas, les moyens de serrage peuvent également comprendre ou être constitués de l'organe d'ancrage.

Suivant un mode de réalisation, l'assemblage d'au moins deux éléments de blocage de câbles est destiné à joindre au moins une première portion et une deuxième portion d'extrémité d'au moins un câble, les moyens d'assemblage liant successivement une pluralité d'éléments de blocage, au moins un des éléments de blocage étant configuré pour être fixé à l'une des deux portions d'extrémité et au moins un autre des éléments de blocage étant configuré pour être fixé à l'autre des deux portions d'extrémité. Les moyens d'assemblage comprennent de préférence dans ce cas au moins un câble de liaison.

Selon un autre aspect, l'invention concerne également un dispositif de jonction d'au moins une bande transporteuse du type s'étendant suivant un axe longitudinal et comprenant un corps en matériau flexible à l'intérieur duquel est logé un renfort comprenant des câbles s'étendant au moins en partie axialement, le dispositif de jonction étant destiné à relier au moins une première et une deuxième portions d'extrémités alignées de la bande transporteuse, le dispositif de jonction étant remarquable en ce qu'il comprend au moins un assemblage d'éléments de blocage présentant tout ou partie des caractéristiques décrites ci-avant et destiné à être rapporté sur la première portion d'extrémité et la deuxième portion d'extrémité de la bande transporteuse, de sorte à relier une partie au moins des câbles de renfort de la première portion d'extrémité de la bande transporteuse avec une partie au moins des câbles de renfort de la deuxième portion d'extrémité de la bande transporteuse.

En d'autres termes, l'invention concerne également un dispositif de jonction d'au moins une bande transporteuse du type s'étendant suivant un axe longitudinal et comprenant un corps en matériau flexible à l'intérieur duquel est logé un renfort comprenant des câbles de renfort s'étendant au moins en partie axialement, le dispositif de jonction étant destiné à relier au moins une première et une deuxième portions d'extrémités de la bande transporteuse, le dispositif de jonction étant caractérisé en ce qu'il comprend au moins un assemblage d'au moins deux éléments de blocage reliés entre eux par des moyens d'assemblage, les moyens d'assemblage comprenant au moins un câble de liaison, l'assemblage étant destiné à être rapporté sur la première portion d'extrémité et la deuxième portion d'extrémité de la bande transporteuse, de sorte à relier une partie au moins des câbles de renfort de la première portion d'extrémité de la bande transporteuse avec une partie au moins des câbles de renfort de la deuxième portion d'extrémité de la bande transporteuse, chaque élément de blocage de câble comprenant au moins deux appuis opposés configurés pour enserrer au moins la portion d'un câble associé parmi les câbles de renfort et le câble de liaison, les appuis présentant chacun au moins une gorge délimitant ensemble au moins une partie d'une cavité traversante pour recevoir au moins la portion du câble associé traversant l'élément de blocage entre une ouverture d'entrée et une ouverture de sortie alignées suivant un axe de référence, la cavité comportant une partie intermédiaire élargie, entre des portions d'ouvertures d'entrée et de sortie, élargie radialement par rapport à la portion d'ouverture d'entrée et à la portion d'ouverture de sortie, l'élément de blocage comprenant au moins un organe d'ancrage configuré pour occuper au moins partiellement une portion de la partie intermédiaire élargie de la cavité située dans l'alignement des ouvertures d'entrée et de sortie, de sorte à créer localement une déformation radiale de la section de la portion du câble associé. Suivant un mode de réalisation, certains des éléments de blocage, voire chaque élément de blocage de câble, comporte tout ou partie des caractéristiques précitées.

Suivant un mode de réalisation, le dispositif de jonction comprend au moins deux plaques de jonction configurées pour recouvrir chacune un côté distinct des portions d'extrémités de la bande transporteuse de sorte que les portions d'extrémités de la bande transporteuse soient disposées entre les deux plaques de jonction, les plaques de jonction étant fixées ensemble par des moyens de fixation agencés pour traverser respectivement une plaque de jonction, une des extrémités de la bande transporteuse puis l'autre plaque de jonction, chaque plaque de jonction étant réalisée en une matière souple et élastique et comprenant les assemblages d'éléments de blocage tels que décrits ci-avant, de préférence noyés au moins en partie dans la matière souple et élastique de la plaque de jonction correspondante.

Suivant un mode de réalisation, le dispositif de jonction comprend au moins :
- un assemblage longitudinal supérieur d'au moins deux éléments de blocage supérieurs parmi les éléments de blocage, reliés ensemble par un câble de liaison supérieur parmi les câbles de liaison pour chevaucher les deux extrémités desdits câbles de renfort à relier, et
- un assemblage longitudinal inférieur d'au moins deux éléments de blocage inférieurs parmi les éléments de blocage, reliés ensemble par un câble de liaison inférieur parmi les câbles de liaison pour chevaucher les deux extrémités desdits câbles de renfort à relier,
les éléments de blocage supérieur de l'assemblage longitudinal supérieur étant conformés pour être assemblés avec les éléments de blocage inférieur de l'assemblage longitudinal inférieur en formant ensemble un assemblage de jonction, et pour enserrer une partie au moins des câbles de renfort de la première portion d'extrémité de la bande transporteuse et une partie au moins des câbles de renfort de la deuxième portion d'extrémité de la bande transporteuse, le dispositif de jonction comprenant de préférence une pluralité d'assemblages de jonction disposés parallèlement les uns par rapport aux autres et configurés pour être répartis de façon régulière sur la jonction.

Suivant un mode de réalisation, certains des moyens d'assemblage sont constitués par certains des moyens de fixation, qui sont agencés pour traverser respectivement une plaque de jonction, une des extrémités de la bande transporteuse puis l'autre plaque de jonction.

Suivant un mode de réalisation, dans une position enserrée des câbles de renfort de la première portion d'extrémité et de la deuxième portion d'extrémité, les câbles de renfort sont disposés de manières parallèles entre eux, et parallèles à l'axe longitudinal de référence des portions de câbles de liaison bloquées avec leur élément de blocage correspondant.

Suivant un mode de réalisation, des pièces d'appui de l'élément de blocage sont configurées pour enserrer au moins la portion d'un premier câble parmi les câbles de renfort et le câble de liaison, l'élément de blocage comportant une gorge délimitant au moins une partie d'une cavité traversante de réception d'un deuxième câble parmi les câbles de renfort et le câble de liaison, la cavité traversante présentant deux ouvertures d'extrémité axiale.

Suivant un mode de réalisation, les moyens de fixation comprennent chacun une tête et un tronçon d'ancrage, les plaques de jonction comportant au moins des premières interfaces pour coopérer avec les têtes des moyens de fixation et/ou des deuxièmes interfaces pour coopérer avec les tronçons d'ancrage des moyens de fixation, les plaques de jonctions étant agencées pour s'apparier l'une avec l'autre. De préférence les premières et deuxièmes interfaces sont portées par des éléments de blocage de l'un au moins des assemblages logés dans la plaque de jonction correspondante.

Suivant un mode de réalisation, chaque élément de blocage permet d'assurer la fixation de trois portions de câbles différents s'étendant longitudinalement globalement de manière parallèle deux, à deux parmi lesquels un câble central formant câble de liaison traverse l'élément de blocage longitudinalement et deux câbles de renfort pour être bloqués par un organe d'ancrage configuré pour occuper au moins partiellement une portion de la partie intermédiaire correspondante.

Selon un autre aspect, l'invention concerne également une jonction de bande transporteuse s'étendant suivant un axe longitudinal comprenant un corps en matériau flexible à l'intérieur duquel est logé un renfort comprenant des câbles s'étendant au moins en partie axialement, la bande transporteuse comportant une première et une deuxième portions d'extrémités reliées ensemble par un dispositif de jonction, la jonction étant caractérisée en ce que le dispositif de jonction comprend au moins un assemblage d'éléments de blocage présentant tout ou partie des caractéristiques décrites ci-avant et rapporté sur la première portion d'extrémité et la deuxième portion d'extrémité de la bande transporteuse, de sorte à relier une partie au moins des câbles de renfort de la première portion d'extrémité de la bande transporteuse avec une partie au moins des câbles de renfort de la deuxième portion d'extrémité de la bande transporteuse.

Suivant un mode de réalisation, la jonction comprend au moins un assemblage d'éléments de blocage, de préférence une pluralité, reliant tous les câbles de renfort de la première portion d'extrémité de la bande transporteuse avec tous les câbles de renfort de la deuxième portion d'extrémité de la bande transporteuse.

Suivant un mode de réalisation, la jonction comprend une pluralité d'assemblage d'éléments de blocage alignés axialement, chacun des assemblages présentant un décalage axial avec au moins un assemblage adjacent, le décalage axial étant de préférence supérieur ou égal à la longueur axiale d'un élément de blocage.

Selon un autre aspect, l'invention concerne également un procédé de fabrication d'une jonction de bande transporteuse telle que décrite ci-avant, caractérisé en ce qu'il comporte au moins les étapes suivantes :
- décorticage d'une partie supérieure et d'une partie inférieure du corps de la bande transporteuse au niveau de la première portion d'extrémité et de la deuxième portion d'extrémité de la bande transporteuse ;
- mise en place d'au moins un assemblage d'éléments de blocage de sorte à relier une partie au moins des câbles de renfort de la première portion d'extrémité de la bande transporteuse avec une partie au moins des câbles de renfort de la deuxième portion d'extrémité de la bande transporteuse.

Suivant un mode de réalisation, le procédé de fabrication comprend au moins une étape de mise en place d'au moins deux plaques de jonction recouvrant chacune un côté distinct des première et deuxième portions d'extrémités de la bande transporteuse de sorte que les première et deuxième portions d'extrémités de ladite bande transporteuse soient disposées entre les deux plaques de jonction, les plaques de jonction étant formées de préférence en matériau vulcanisable, l'étape de mise en place des plaques de jonction étant de préférence concomitante avec l'étape de mise en place d'au moins un assemblage d'éléments de blocage.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue isométrique d'un assemblage de deux éléments de blocage selon un premier mode de réalisation de l'invention ;
[Fig. 2] : une vue en perspective de dessous de l'assemblage selon ce premier mode de réalisation ;
[Fig. 3] : une vue en coupe horizontale de dessus de cet assemblage selon ce premier mode de réalisation ;
[Fig. 4] : une vue en coupe transversale de ce même assemblage selon ce premier mode de réalisation ;
[Fig. 5] : une vue écorchée de côté de ce même assemblage selon ce premier mode de réalisation ;
[Fig. 6] : une vue isométrique éclatée d'une partie d'une jonction de bande transporteuse comprenant des assemblages d'éléments de jonction selon ce premier mode de réalisation ;
[Fig. 7] : une vue isométrique de cette jonction de bande transporteuse selon ce premier mode de réalisation, dans une position de jonction ;
[Fig. 8] : une vue isométrique éclatée d'une jonction de bande transporteuse comprenant des assemblages d'éléments de jonction selon ce même premier mode de réalisation ;
[Fig. 9] : une vue isométrique de dessus d'un élément de blocage selon un deuxième mode de réalisation de l'invention ;
[Fig. 10] : une vue isométrique de dessous de l'élément de blocage selon ce deuxième mode de réalisation ;
[Fig. 11] : une vue en coupe transversale de la figure 9 ;
[Fig. 12] : une vue d'une coupe transversale d'un élément de blocage selon une variante de réalisation ;
[Fig. 13] : une vue d'une partie l'élément de blocage selon ce deuxième mode de réalisation ;
[Fig. 14] : une vue isométrique de dessus d'un élément de blocage selon un troisième mode de réalisation de l'invention ;
[Fig. 15] : une vue en coupe transversale de l'élément de blocage selon ce troisième mode de réalisation ;
[Fig. 16] : une vue d'une partie de l'élément de blocage selon ce troisième mode de réalisation ;
[Fig. 17] : une vue d'une partie d'une jonction de bande transporteuse comprenant des éléments de blocage selon ce troisième mode de réalisation ;

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence aux trièdres **X**, **Y**, **Z** ou **X**', **Y**', **Z**' indiqués aux figures.

### DESCRIPTION DÉTAILLÉE D'UN MODE DE RÉALISATION

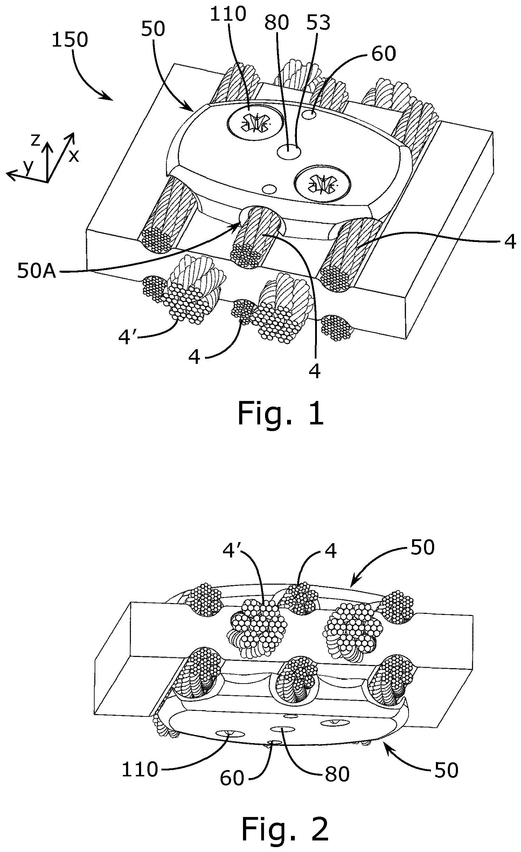

En référence aux figures 1, 2, 3, 4 et 5, les figures illustrent un assemblage **150** de deux éléments de blocage **50** selon un premier mode de réalisation de l'invention.

L'assemblage **150** illustré comprend deux éléments de blocage **50** de câbles **4,** un premier élément de blocage **50** supérieur, et un deuxième élément de blocage **50** inférieur, lesquels sont superposés verticalement. Chaque élément de blocage **50** de câble **4** permet d'assurer son blocage par rapport à une portion **40** d'un câble **4.** De préférence, les éléments de blocage **50** sont formés, ou constitués, en matériau(x) métallique(s). Pour assurer cette fixation, chaque élément de blocage **50** comporte un corps traversé par une cavité **70** configurée pour recevoir au moins la portion **40** du câble **4,** la cavité **70** traversant le corps de part en part entre une ouverture d'entrée **50A** d'une part, et une ouverture de sortie **50B** d'autre part, ces ouvertures étant alignées suivant un axe longitudinal de référence **X.**

La cavité **70** est configurée pour enserrer la portion **40** de câble **4** sur tout ou partie de sa longueur. Pour ce faire, et de manière générale, l'élément de blocage **50** comprend au moins un appui **51** d'un premier côté et un appui **52** d'un deuxième côté opposé au premier côté, les appuis **51**, **52** étant configurés pour enserrer au moins la portion **40** du câble **4.** Chacun des appuis **51**, **52** présente une gorge **71**, **72** délimitant ensemble au moins une partie de la cavité **70** et accueillant la portion **40** de câble **4.** Dans ce mode de réalisation, le corps de l'élément de blocage **50** traversé d'une ouverture **50A** à l'autre **50B** par la cavité **70** est une pièce monobloc, de sorte que les appuis **51**, **52** sont formés ensemble, d'un seul tenant. La cavité **70** est donc ici ouverte axialement longitudinalement au niveau des ouvertures d'entrée **50A** et de sortie **50B,** la cavité **70** étant fermée radialement par les appuis **51**, **52** de sorte que les gorges **71**, **72** se rejoignent pour former un contour fermé entourant la portion **40** de câble **4.**

La cavité **70** de chacun des deux éléments de blocage **50** recevant la portion **40** du câble **4** comporte une partie intermédiaire ou centrale élargie **73**, laquelle est disposée entre des portions ouvertures d'entrée **50A** et de sortie **50B**, élargie radialement par rapport à la portion d'ouverture d'entrée **50A** et par rapport à la portion d'ouverture de sortie **50B.** Cette partie intermédiaire élargie **73** est disposée dans l'alignement des ouvertures d'entrée **50A** et de sortie **50B**, c'est-à-dire que ladite partie intermédiaire élargie **73** se trouve sur l'axe longitudinal de référence **X**, ici centrée sur cet axe **X**, mais elle peut être éventuellement décentrée. Les portions d'ouvertures forment des portions de la cavité **70** s'étendant globalement longitudinalement et débouchant par rapport à l'élément de blocage **50** par l'ouverture **50A**, **50B** associée.

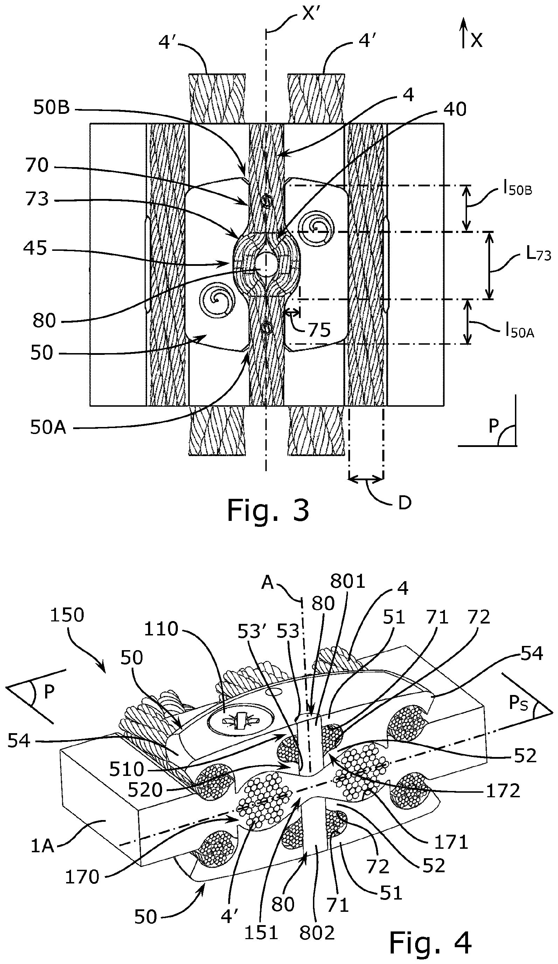

Chaque élément de blocage **50** est pourvu d'au moins un organe d'ancrage **80** configuré pour occuper au moins partiellement une portion de la partie intermédiaire **73** élargie de la cavité **70**, de sorte à créer localement une déformation **45** de la section de la portion **40** du câble **4** suivant au moins une composante radiale. Comme cela est visible par exemple sur la figure 4, l'organe d'ancrage **80** est ici formé par une tige rectiligne dont une portion **83** de la tige **80** vient pénétrer dans la partie intermédiaire élargie **73.** Lorsqu'une portion **40** de câble **4** est logée dans la cavité **70,** cette tige **80** vient alors la traverser localement, de préférence ici radialement par rapport à l'axe longitudinal de référence **X.** Le câble **4** comporte une structure présentant une âme **41** entourée de torons **42,** chacun des torons **42** et l'âme **41** étant constitués de fils **43.** La tige de l'organe d'ancrage **80,** en pénétrant dans le câble **4,** sépare localement une partie des fils **43** de la structure du câble **4** d'une autre partie, ces deux parties de fils **43** étant écartées vers l'extérieur par rapport à l'organe d'ancrage **80** créant localement un gonflement, c'est-à-dire une augmentation du gabarit de la portion **40** du câble **4** correspondant.

Ce gonflement s'étend par rapport à une enveloppe sensiblement cylindrique du câble **4** suivant une composante globalement radiale et dans deux sens opposés, c'est-à-dire suivant un axe transversal **Y,** lequel est perpendiculaire à l'axe longitudinal **X** et à un axe **A** vertical de la tige de l'organe d'ancrage **80,** créant ainsi une déformation transversale **45** de la section initialement cylindrique de la portion **40** du câble **4** globalement le long de cet axe transversal **Y',** dans un sens et dans l'autre. Chacun des éléments de blocage **50** est configuré de sorte que cette déformation **45,** une fois l'organe d'ancrage **80** positionné, vient en contact et en appui avec une partie au moins des parois intérieures délimitant la partie intermédiaire élargie **73** de la cavité **70.**

Cette insertion de la tige **80** dans le câble est facilitée lorsque l'organe d'ancrage **80** comprend une extrémité distale **82,** opposée à une tête **81,** munie d'une pointe **820** de sorte à pénétrer au moins en partie dans le câble **4** en séparant progressivement les fils **43** de la structure du câble **4.** Cette pointe **820** est de préférence arrondie de sorte à permettre l'écartement des fils **43** de la structure sans porter atteinte à leur intégrité structurelle. Un rayon de courbure de l'arrondi est alors choisi de sorte à faciliter l'écartement des fils **43** sans les détériorer.

Pour permettre la mise en place de cette tige **80,** l'un des deux appuis **51, 52** accessible de l'extérieur comporte un trou traversant **53** débouchant dans la partie intermédiaire **73** élargie de la cavité **70** pour y permettre l'engagement d'une première tige **801,** et permettre ainsi à ladite tige **801** de pénétrer, ici en translation, dans la partie intermédiaire **73** élargie de la cavité **70** (voir la figure 4). L'autre des deux appuis **51, 52** comporte également un second trou **53',** par exemple traversant comme cela est illustré, mais pas nécessairement, afin de venir recevoir la pointe **820** de d'une seconde tige **802** et la maintenir. Ce second trou **53'** est disposé en regard, radialement par rapport à l'axe longitudinal **X** du câble **4,** du trou traversant **53** débouchant. La tige **80, 801, 802** est maintenue solidaire de l'élément de blocage **50** en étant frettée dans chacun des deux trous **53, 53'** successivement dans le sens de l'insertion lors de son positionnement. Les trous **53, 53'** logeant intégralement la tige **801, 802** formant ici l'organe d'ancrage **80,** le trou **53** forme une première interface **510** apte à loger la tête **81** de l'organe d'ancrage **80,** et le trou **53'** forme une deuxième interface **520** avec laquelle est apte à coopérer un tronçon d'ancrage **84** dudit organe d'ancrage **80.** Dans ce mode de réalisation, les deux tiges **801, 802** forment chacune un organe d'ancrage **80** distinct pour l'un des éléments de blocage **50** considéré, mais il pourrait être envisagé alternativement qu'une même tige soit commune aux deux éléments de blocage **50** superposés verticalement.

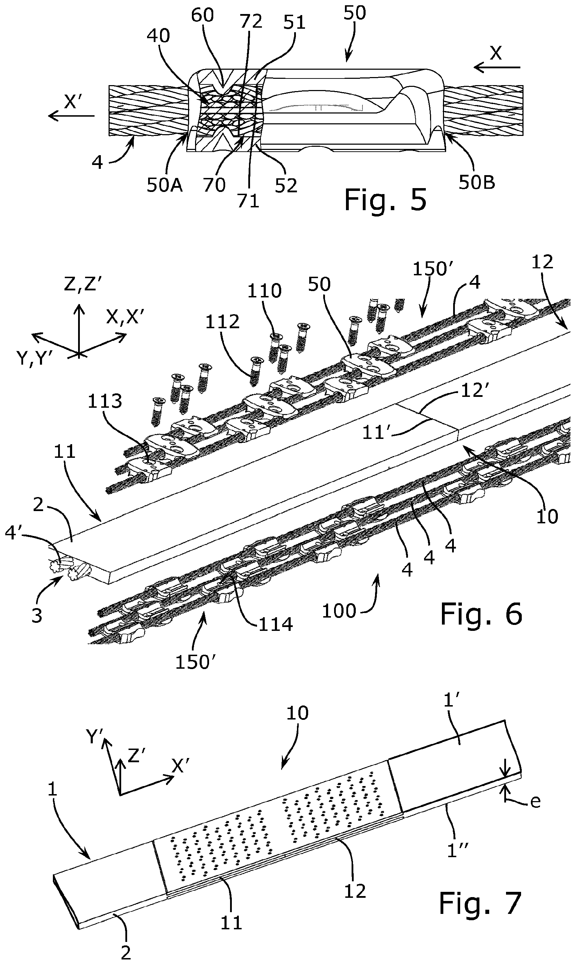

La cavité **70** recevant la portion **40** de câble **4** présente à ses extrémités, au voisinage de chacune des ouvertures d'entrée **50A** et de sortie **50B,** une forme délimitant une enveloppe cylindrique configurée pour coopérer avec une enveloppe cylindrique dudit câble **4.** Les appuis **51, 52** étant formés d'un seul tenant et entourant complètement la portion **40** de câble **4,** les extrémités longitudinales de la cavité **70** sont formées par des portions cylindriques qui forment les portions d'ouvertures et qui sont complémentaires de ce câble **4,** voire de diamètre légèrement plus réduit de sorte à permettre un léger serrage augmentant les efforts de frictions entre le câble **4** et la gorge **71, 72** correspondante de la cavité **70.** Dans cette configuration, le câble **4** est suffisamment enserré pour ne pas être disposé de façon lâche dans la cavité **70,** mais pas trop, pour permettre la mise en place du câble **4** à travers ladite cavité **70** par une opération manuelle mise en oeuvre par un opérateur, de préférence sans l'aide d'un outillage spécifique. Des moyens de serrage **60** additionnels peuvent être prévus pour assurer un serrage des deux appuis **51, 52** l'un par rapport à l'autre. Dans cet exemple un sertissage **60** est prévu au niveau de chacune des ouvertures d'entrée et de sortie **50A, 50B,** le sertissage étant obtenu par un poinçonnage de l'un des appuis sur une surface extérieure, créant une déformation de matière en saillie à l'intérieur de la cavité **70,** dans la gorge **71, 72** correspondante, comme cela est visible en particulier sur la figure 5. Bien entendu, tout type de sertissage peut permettre de former un moyen de serrage selon la configuration du l'élément de blocage **50.**

Ces portions d'extrémités cylindriques de la cavité **70,** ou portions d'ouvertures, débouchent axialement sur les ouvertures d'entrée et de sortie **50A, 50B.** Ces portions d'ouvertures s'étendent chacune axialement suivant une longueur **l_{50A}** et **l_{50B},** chacune étant inférieure ou égale à la longueur axiale **L₇₃** de la partie intermédiaire **73** élargie de la cavité **70.**

Comme cela est visible par exemple sur la figure 3, la partie intermédiaire **73** élargie de la cavité **70** présente un élargissement radial **75** s'étendant globalement suivant un plan orthogonal **P** à l'axe **A** de la portion de tige **83** de l'organe d'ancrage **80** configuré pour pénétrer dans le câble **4.** Cet élargissement **75** transversal de la cavité est de préférence supérieur ou égal à 10%, de préférence encore supérieur ou égal à 25% d'un diamètre **D** du câble **4,** et de préférence inférieur ou égal à 50%, de préférence encore inférieur à 40% du diamètre **D** du câble **4,** de chaque côté par rapport à la cavité **70** (voir par exemple la figure 3). Par exemple, pour un câble **4** de 5mm de diamètre, traversé sensiblement au milieu par une tige **83** de 3 mm de diamètre, le câble **4** va présenter un renflement de part et d'autre de la tige **83,** ce renflement étant dirigé globalement transversalement par rapport à l'axe longitudinal de référence **X** de la cavité **70,** dans un sens et dans l'autre. La partie intermédiaire **73** élargie de la cavité **70** est alors configurée pour présenter un élargissement **75** transversal configurée pour y loger ce renflement, et présenter une dimension correspondant à 30% du diamètre **D** du câble **4** de chaque côté de l'axe **A.**

Dans une telle configuration, chacun des éléments de blocage **50** permet de maintenir bloquée une portion de câble grâce d'une part aux efforts de friction de l'élément de blocage **50** localement avec la portion **40** de câble **4,** en particulier entre les appuis **51, 52** complétés par les moyens de serrage **60** complémentaires, et d'autre part, la déformation **45** de la portion **40** de câble **4** assurée par l'organe d'ancrage **80.** Cette déformation **45** du câble est permise par l'élargissement intérieur **75** de la cavité **70** au niveau de la portion de la partie intermédiaire **73** élargie disposée entre deux portions de sections plus réduites de la cavité **70** qui viennent bloquer le câble **4** en translation axiale.

Comme évoqué précédemment, dans ce premier mode de réalisation est illustré un assemblage **150** muni de deux éléments de blocage **50** de câbles assemblés verticalement suivant un axe vertical **Z :** un premier élément de blocage **50** supérieur est configuré pour s'associer avec un deuxième élément de blocage **50** inférieur, reliés ensemble par des moyens de fixation **110.**

Cette paire de moyens de blocage **50** inférieur et supérieur est configurée pour enserrer entre eux au moins une autre portion de câble **4',** de préférence deux câbles **4'** adjacents, comme illustré sur les figures 1 à 6. De cette manière, les premier et deuxième éléments de blocage **50** inférieur et supérieur forment ensemble des mâchoires de serrage configurées pour venir enserrer ces deux câbles **4',** dans un espace intérieur **151** de l'assemblage **150.** Dans une configuration non particulièrement illustrée sur ces figures, on notera que de telles mâchoires de serrage peuvent former des appuis **51, 52** d'un même élément de blocage **50** au sens de la présente l'invention : dans ce cas les deux appuis **51, 52 ne** sont pas réalisés d'un seul tenant, mais en deux pièces distinctes et les moyens de fixation **110** constituent alors des moyens de serrage **60.**

Les cavités **70** de chacun des éléments de blocage **50** sont positionnées, dans une position assemblée des premier et deuxième éléments de blocage **50** inférieur et supérieur, de manière à être sensiblement parallèles, et en particulier symétriques par rapport à un plan de serrage **Ps.** Ces cavités **70** de chacun des éléments de blocage **50** inférieur et supérieur sont positionnées alignées dans un plan vertical, parallèle à l'axe longitudinal **X** des deux portions **40** de câbles **4** bloquées et perpendiculaire au plan de serrage **Ps.** Les deux câbles **4'** enserrés entre les deux éléments de blocage **50** inférieur et supérieur sont disposés de manières parallèles entre eux, parallèles à l'axe longitudinal de référence **X** des deux portions **40** de câbles **4** bloquées avec leur élément de blocage **50** correspondant, et parallèle aux câbles de liaison inférieur et supérieur associés.

Les deux câbles **4'** enserrés par les mâchoires **50** de l'assemblage **150** sont décentrés par rapport au plan vertical précité et positionnés de manière symétrique par rapport à ce plan vertical. Les éléments de blocage **50** inférieur et supérieur présentent chacun du côté intérieur dirigé vers l'espace intérieur **151,** une gorge **171** recevant chacun en appui un des câbles **4'.** Les gorges sont associées par paire d'une gorge de chacun des éléments de blocage **50** inférieur et supérieur. Les gorges **171** de la paire sont alignées ou superposées verticalement et délimitent ensemble au moins une partie d'une cavité **170** traversante pour recevoir la portion correspondante du câble **4'** traversant l'assemblage **150** entre deux ouvertures ouvertes axialement. Ainsi, deux cavités **170** sont formées entre les mâchoires formant une interface pour enserrer les portions de câbles **4'** correspondantes. Là encore, dans une configuration non illustrée sur ces figures, chacune des deux cavités **170** pourrait former dans un mode de réalisation une cavité présentant également une partie intermédiaire élargie au sens de l'invention.

Les éléments de blocage **50** inférieur et supérieur présentent chacun du côté intérieur un renflement **172** orienté vers l'espace intérieur situé sensiblement au droit, verticalement, de la cavité **70** correspondante et s'étendant sensiblement longitudinalement entre les deux ouvertures d'entrée et de sortie **50A, 50B.** Cela permet d'offrir une surépaisseur permettant une quantité de matière suffisante pour recevoir une extrémité de l'organe d'ancrage **80** et garantir son ancrage, ici pour garantir un trou **53'** dimensionné de sorte à garantir le bon frettage de l'extrémité de la tige **83.** Un tel renflement **172** peut, de manière générale, être localisé juste au droit de la partie intermédiaire **73** élargie de la cavité **70** sans nécessairement s'étendre longitudinalement. Toutefois, dans le cas d'une telle mâchoire, un renflement **172** qui se poursuit longitudinalement permet de délimiter au moins une partie d'une gorge, ici les deux gorges de part et d'autre transversalement.

Le trou **53'** formant la deuxième interface **520** de chacun des deux éléments de blocage **50** avec laquelle est apte à coopérer un tronçon d'ancrage **84** dudit organe d'ancrage **80** et recevant la pointe **520** de la tige **83,** présente un bord débouchant dans la partie intermédiaire **73** élargie de la cavité **70.** Ce bord débouchant est configuré de sorte à présenter un arrondi sur toute sa circonférence. De cette manière, lorsque la portion **40** de câble **4** est plaquée contre la gorge **72** de l'appui intérieur **52,** qui est l'appui situé du côté intérieur de l'élément de blocage **50** formant mâchoire, à savoir le plus proche de l'espace intérieur **151,** lors de l'insertion de l'organe d'ancrage **80,** le câble **4** est plaqué radialement contre la cavité **70,** en particulier contre la paroi intérieure dans la partie intermédiaire **73** élargie, et vient au contact de cet arrondi et non d'une arrête vive circonférentielle, ce qui limite son usure.

Comme illustré sur les figures 6, 7 et 8, les éléments de blocage **50** sont utilisés en combinaison pour former un assemblage particulier. En particulier, ces éléments de blocage **50** sont utilisés dans le cadre d'une jonction **10** de bande transporteuse **1.** De telles bandes transporteuses **1** sont utilisées notamment dans les mines, les carrières et d'autres endroits où elles sont soumises à des conditions de travail sévères et à des tensions internes élevées.

La bande transporteuse **1** s'étend suivant un axe longitudinal **X'** correspondant globalement à sa direction de déplacement le long d'un convoyeur. La bande transporteuse **1** comprend un corps **2** formé d'un matériau flexible tel qu'un élastomère vulcanisable, ou une matière de synthèse, armé d'un renfort **3** comprenant des câbles **4',** par exemple en acier, noyés dans le corps **2.** Les efforts repris par la bande transporteuse **1** sont principalement longitudinaux de sorte que les câbles **4'** sont agencés dans le corps **2** de la bande transporteuse **1** en s'étendant axialement et qu'ils travaillent en traction durant l'utilisation de ladite bande transporteuse **1.**

La bande transporteuse **1** comporte un premier bord d'extrémité **11'** et un deuxième bord d'extrémité **12',** à partir desquels s'étendent sur la bande transporteuse **1** une première portion d'extrémité **11** et une deuxième portion d'extrémité **12** reliées ensemble par un dispositif de jonction **100** assurant la jonction **10** des deux portions d'extrémités **11, 12.** En position de jonction, la portion d'extrémité **11** et la deuxième portion d'extrémité **12** sont alignées verticalement, le premier bord d'extrémité **11'** et le deuxième bord d'extrémité **12'** étant en vis-à-vis longitudinalement, de préférence aboutés. On notera en pratique que, compte tenu des distances pour convoyer les différents matériaux ou différents produits selon les usages dans des carrières ou autres lieux d'utilisation, une même bande transporteuse **1** peut être formée par la jonction de plusieurs portions longitudinales de bande transporteuse reliées ensemble par un dispositif de jonction **100.**

Les portions d'extrémités **11, 12** sont configurées de sorte qu'en position jointes, la jonction **10** au niveau du dispositif de jonction **100** est d'épaisseur égale à celle de la bande transporteuse **1.** De cette manière, l'utilisation du dispositif de jonction **100** ne crée pas localement une surépaisseur au niveau de ses portions d'extrémités **11, 12,** l'épaisseur étant constante. Une telle caractéristique est particulièrement importante pour éviter toute usure prématurée due au passage de racleurs sur le convoyeur. Pour satisfaire cette contrainte, la première portion d'extrémité **11** et la deuxième portion d'extrémité **12** sont amincies, en particulier après avoir été décortiquées par une opération de décorticage, pour garantir la mise en place du dispositif de jonction **100.** Ce décorticage s'étend de préférence dans l'épaisseur jusqu'aux câbles **4',** c'est-à-dire jusqu'à une épaisseur correspondant à l'épaisseur des câbles **4'.**

La bande transporteuse **1** loge dans son corps **2** les câbles **4'** de renfort. La bande transporteuse **1** est structurée de sorte à comprendre, dans le sens de son épaisseur **e,** une nappe sensiblement centrale **1A** qui intègre les câbles **4',** intercalée verticalement entre deux nappes extérieures de matière flexible du corps **2** dépourvues de renfort **3,** à savoir : une partie supérieure et une partie inférieure du corps **2** de la bande transporteuse **1.**

Chacun des câbles **4'** de la bande transporteuse **1** s'étend longitudinalement dans le corps **2** de la bande transporteuse **1** continûment jusque dans la portion d'extrémité correspondante où est située l'extrémité lâche et sectionnée de chaque câble **4'.** Les portions d'extrémités **11, 12** sont formés, dans le prolongement longitudinal de la bande transporteuse, de la nappe centrale **1A** intégrant les câbles et dégarnie ou décortiquée des nappes extérieures, à savoir décortiquée des couches de matière inférieure et supérieure situées normalement, sur le reste de la bande transporteuse hors de la jonction **10,** de part et d'autre de la nappe centrale **1A.** L'épaisseur des portions d'extrémités **11, 12** correspond à l'épaisseur de la nappe centrale **1A** obtenue après l'opération de décorticage, et de préférence égale à un diamètre moyen des câbles **4'** ou au diamètre du câble **4'** de plus grande dimension. Un dégarnissage parfait de chaque câble correspondant au retrait complet de toute la matière du corps **2** entourant les câbles **4',** et en particulier la matière du corps **2** entre les câbles **4',** n'est donc pas nécessaire dans ce mode de réalisation.

Le dispositif de jonction **100** assurant la jonction des deux portions d'extrémité **11, 12** alignées longitudinalement comprend ici deux plaques de jonction **101, 102** dimensionnées chacune pour recouvrir, sur toute ou partie de la largeur de la bande transporteuse **1** et de préférence sur toute la largeur, la première portion d'extrémité **11** et la deuxième portion d'extrémité **12** d'un même côté de la bande transporteuse **1.** Les plaques de jonction **101, 102** comportent une plaque de jonction inférieure **101** se situant à cheval sous les première et deuxième portions d'extrémité **11, 12** et une plaque de jonction supérieure **102** positionnée à cheval sur les première et deuxième portions d'extrémité **11, 12** de sorte à les recouvrir. Ces plaques de jonction **101, 102** présentent chacune une épaisseur complémentaire de celle de la portion d'extrémité correspondante configurée pour combler ensemble le retrait de matière effectué lors de l'étape de décorticage visant à obtenir l'amincissement de la première portion d'extrémité **11** et de la deuxième portion d'extrémité **12.** De cette manière, après jonction, on obtient un affleurement de la jonction **10** avec des surfaces inférieure **1"** et supérieure **1'** de la bande transporteuse **1,** c'est-à-dire une épaisseur **e** constante de la bande transporteuse **1,** sans relief. Comme déjà évoqué ci-avant, une telle caractéristique permet d'éviter toute usure prématurée du fait de l'usage de racleurs (non illustrés) se trouvant sur le parcours des matériaux convoyés et configurés pour racler la surface supérieure **1'** de la bande transporteuse **1.**

Les première et deuxième portions d'extrémités **11, 12** de ladite bande transporteuse **1** sont prises entre, ou enserrées entre, verticalement, les deux plaques de jonction **101, 102** qui créent chacune un pont de matière entre les première et deuxième extrémités **11, 12.** Ces plaques de jonction **101, 102** sont réalisées en une matière souple et élastique, par exemple en caoutchouc vulcanisé, ou en une matière de synthèse telle que du polyuréthane. Il s'agit de préférence de la même matière souple que celle constituant le corps **2** de la bande transporteuse **1.**

Conformément à l'invention, le dispositif de jonction **100** comprend au moins un assemblage **150** d'éléments de blocage **50** rapporté sur la première portion d'extrémité **11** et la deuxième portion d'extrémité **12** de la bande transporteuse **1,** de sorte à relier une partie au moins des câbles de renfort **4'** de la première portion d'extrémité **11** de la bande transporteuse **1** avec une partie au moins des câbles de renfort **4'** de la deuxième portion d'extrémité **12** de la bande transporteuse **1.**

Pour garantir la jonction des deux portions d'extrémité de la bande transporteuse **1,** les éléments de blocage **50** sont reliés ensemble de différentes manières.

Des éléments de blocage **50** sont assemblés verticalement, par paires, de sorte que pour chaque assemblage **150,** un premier élément de blocage **50** supérieur est configuré pour s'associer avec un deuxième élément de blocage **50** inférieur, reliés ensemble par les moyens de fixation **110,** une telle paire de moyens de blocage **50** inférieur et supérieur étant configurée pour enserrer au moins un câble **4',** de préférence deux câbles **4'** adjacents. Comme précédemment décrit en relation avec les précédentes figures, les premier et deuxième éléments de blocage **50** inférieur et supérieur forment ensemble des mâchoires de serrage configurées pour venir enserrer au moins une portion de câble **4'.**

Par ailleurs, plusieurs éléments de blocage **50** supérieurs sont également reliés ensemble longitudinalement par un câble **4** qui forme un câble de liaison pour la jonction **10** et qui traverse une cavité **70** de chacun desdits éléments de blocage **50** dits supérieurs. De même, plusieurs éléments de blocage **50** inférieurs sont également reliés ensemble longitudinalement par un câble **4** de liaison qui traverse une cavité **70** de chacun des éléments de blocage **50** dits inférieurs. Dans le cadre d'une jonction **10** des portions d'extrémités **11, 12** de la bande transporteuse **1,** renforcée par des câbles **4',** on peut utiliser un assemblage **150** axial longitudinalement de plusieurs éléments de blocage **50** reliés ensemble par un câble **4** de liaison ou de jonction chevauchant les deux extrémités desdits câbles **4'** à relier de la bande transporteuse **1.** Dans ce mode de réalisation, un assemblage **150** longitudinal de plusieurs éléments de blocage **50** supérieurs est associé avec un assemblage **150** longitudinal inférieur complémentaire, formant ainsi une pluralité de mâchoires venant enserrer l'une des extrémités de câbles **4'** et une autre pluralité de mâchoires venant enserrer l'autre des extrémités de câbles **4'** formant ainsi une liaison.

On obtient un assemblage de jonction **150'** d'une pluralité de paires de moyens de blocage **50** inférieur et supérieur telles que décrites ci-avant, lesquelles sont reliés longitudinalement, par un câble **4** inférieur reliant successivement les éléments de blocage **50** inférieurs, et par un câble **4** supérieur reliant successivement les éléments de blocage **50** supérieurs. Un tel assemblage de jonction est divisé en deux parties amovibles, soit une partie supérieure et une partie inférieure.

En appliquant une configuration à la jonction **10** d'une bande transporteuse 1, et en multipliant de tels assemblages de jonction **150'** disposés parallèlement les uns par rapport aux autres et répartis de façon régulière sur la jonction **10,** il est alors possible d'assurer la jonction des deux portions d'extrémités de la bande transporteuse **1** en reliant chaque extrémité de câble **4'** de la première portion d'extrémité **11 à** une autre extrémité de câble **4'** de la seconde portion d'extrémité **12.** Dans ce mode de réalisation, les assemblages de jonction **150'** sont intégrés dans les plaques de jonction **101, 102,** les éléments de blocage **50** étant noyés dans la matière souple et élastique comme par exemple le caoutchouc vulcanisé formant la plaque de jonction **101, 102** associée. Les parties supérieures des assemblages de jonction **150'** d'un même dispositif de jonction **100** (éléments de blocage **50** supérieurs et câbles **4** de liaison supérieurs) sont en effet facilement intégrées au matériau constitutif de la plaque de jonction supérieure **102,** et les parties inférieures des assemblages de jonction **150'** d'un même dispositif de jonction **100** (éléments de blocage **50** inférieurs et câbles **4** de liaison inférieurs) sont en effet facilement intégrées au matériau constitutif de la plaque de jonction inférieure **101.**

Alternativement, ils pourraient être rapportés sur ces première et deuxième portions d'extrémités **11, 12,** puis recouverts d'une plaque de jonction. Toutefois, un tel mode de réalisation présente une souplesse moins importante et imposte une épaisseur plus importante de la jonction ainsi réalisée.

La fixation des plaques de jonction, inférieure **101** et supérieure **102,** s'effectue par des moyens de fixation **110** à tige tels que des vis-écrous. Les moyens de fixation **110** traversent dans l'épaisseur et successivement : une première des deux plaques de jonction **101** ou **102,** puis une des deux portions d'extrémité **11** ou **12,** et enfin la seconde des deux plaques de jonction **101** ou **102.** Dans ce mode de réalisation, les moyens de fixation **110** sont des vis comprenant chacune une tête **111** et un tronçon d'ancrage **112** muni d'un filetage, les plaques de jonction **101, 102** comportant des premières interfaces **113** pour coopérer avec les têtes **111** des moyens de fixation **110** et/ou des deuxièmes interfaces **114** pour coopérer avec les tronçons d'ancrage **112** des moyens de fixation **110.** Les premières et deuxièmes interfaces **113, 114** sont portées par les éléments de blocage **50** intégrés dans les plaques de jonction **101, 102.** Ainsi, dans ce mode de réalisation, les moyens de fixation **110** sont mutualisés pour assurer d'une part la fixation des plaques de jonction **101, 102** entre elles avec les portions d'extrémité **11** ou **12,** et d'autre part, assurer la liaison d'une paire d'éléments de blocage **50** formant mâchoires pour venir enserrer une ou plusieurs portions de câbles **4'.** Dans une configuration particulière non illustrée ici, les moyens de fixation **110** peuvent également former un moyen de serrage **60** d'un élément de blocage **50** qui serait formé par la combinaison d'une paire d'éléments de blocage **50** inférieur et supérieur superposés lorsqu'ils chaque élément de blocage **50** formant l'une des mâchoires forme, ou constitue, des appuis **51, 52** tes que décrits ci-avant avec une ou plusieurs cavité(s) **170** permettant d'y loger une déformation de l'un des câbles **4'** de la portion d'extrémité **11, 12** de bande transporteuse **1** correspondante. Une telle configuration est également possible, même si les éléments de blocage **50** inférieur et supérieur avec de telles cavités **170,** enserrant deux câbles, sans nécessairement présenter un troisième câble central, les mâchoires seraient alors seulement des appuis **51, 52** d'un même élément de blocage **50,** sans que ces appuis constituent en soi des éléments de blocage **50.**

Les premières interfaces **113** comportent chacune une cuvette apte à loger une tête **111** de l'un des moyens de fixation **110.** Les deuxièmes interfaces **114** comportent une partie tubulaire cylindrique **116** dont une surface cylindrique intérieure est apte à coopérer avec le tronçon d'ancrage **112** des moyens de fixation **110,** grâce ici à un taraudage complémentaire du filetage du tronçon d'ancrage **112.**

Les moyens de fixation **110** sont disposés de sorte à traverser les câbles **4'** du câble **4'** correspondant de la portion d'extrémité **11** ou **12** associée. Chaque paire de moyens de blocage **50** inférieur et supérieur est traversée par deux moyens de fixation **110** de type vis et traversant chacune l'une des cavités **170** de l'assemblage, et le câble **4'** qui y est logé. Les moyens de fixations sont décalés de d'un axe transversal **Y'** passant par l'organe d'ancrage **80** de sorte à ne pas être alignés transversalement, l'un des deux moyens de fixation **100** étant décalé d'un pas vers l'avant, l'autre étant décalé d'un pas vers l'arrière. De cette manière on peut réduire le gabarit transversal de l'élément de blocage et/ou de l'assemblage.

Chaque élément de blocage **50** inférieur et supérieur des assemblages **150** comprennent deux ailes **54** s'étendant transversalement, lesquelles sont configurées pour venir en appui contre les câbles **4** de liaison adjacents des assemblages **150** adjacents, d'un côté et de l'autre. De préférence cet appui enveloppe au moins en partie une portion de surface extérieure du câble de sorte à gagner en stabilité et minimiser toute usure au niveau de l'interface avec le câble **4'.**

Les plaques de jonction **101, 102,** venant de part et d'autre des portions d'extrémités **11, 12,** de la bande transporteuse constituée de la nappe centrale **1A** qui intègre les câbles **4',** il n'est pas nécessaire de dégarnir parfaitement tous les câbles **4'** des portions d'extrémités **11, 12.** La jonction est fabriquée en mettant en oeuvre dles étapes suivantes :
- décorticage d'une partie supérieure et d'une partie inférieure du corps **2** de la bande transporteuse **1** au niveau de la première portion d'extrémité **11** et de la deuxième portion d'extrémité **12** de la bande transporteuse **1;**
- mise en place des deux plaques de jonction **101, 102** recouvrant chacune un côté distinct des première et deuxième portions d'extrémités **11, 12** de la bande transporteuse **1** de sorte que les première et deuxième portions d'extrémités **11, 12** de ladite bande transporteuse **1** soient disposées entre les deux plaques de jonction **101, 102 ;**
- lors de cette étape de mise en place des plaques de jonction **101, 102,** on met en place de manière concomitante les assemblage de jonction **150'** en venant associé deux à deux, par paire, les éléments de blocage **50** supérieur formant mâchoire supérieure avec des éléments de blocage **50** inférieure formant mâchoire inférieure, de sorte à relier les câbles **4'** de renfort de la première portion d'extrémité **11** avec les câbles **4'** de renfort de la deuxième portion d'extrémité **12** ;
- fixation de la jonction en venant mettre en place les moyens de fixation 110 pour fixer chaque paire d'éléments de blocage **50** inférieur et supérieur ensemble.

De préférence, les paires d'éléments de blocage **50** inférieur et supérieur sont configurés de sorte à être disposés globalement en quinconce. De cette manière, ils ne sont pas tous alignés transversalement par rapport à l'axe transversal **Y'** de la bande transporteuse **1.**

Les assemblages de jonction **150'** sont également positionnés de sorte que chaque câble **4'** de de renfort de la première portion d'extrémité **11** ou de la deuxième portion d'extrémité **12** est relié par l'un des assemblages de jonction **150',** avec le câble de câble **4'** de de renfort adjacent d'un premier côté, et par un autre des assemblage de jonction **150',** avec le câble de câble **4'** de de renfort adjacent d'un deuxième côté, opposé au premier côté.

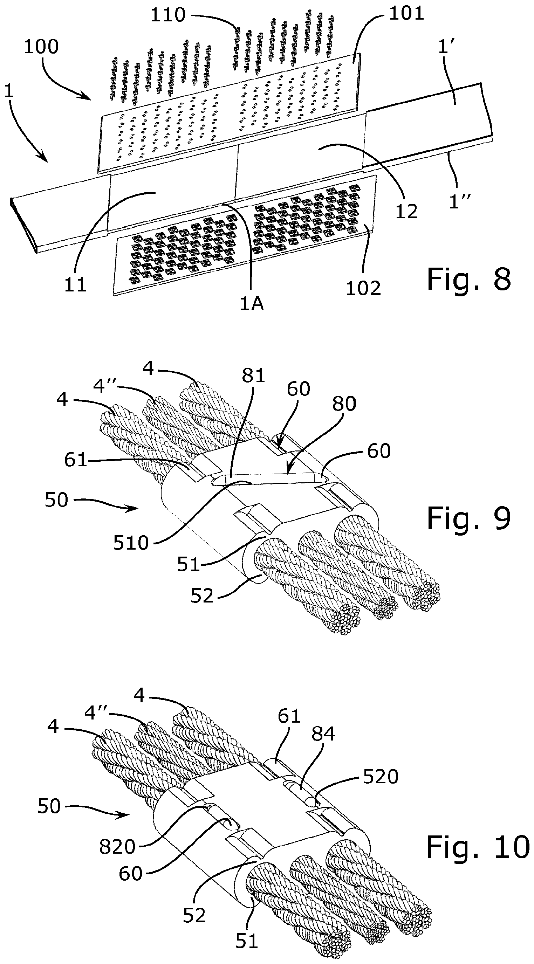

Les figures 9 à 13 illustrent un élément de blocage **50** selon un second mode de réalisation. Cet élément de blocage **50,** en métal, permet d'assurer la fixation de trois brins de câbles ou portions de câbles différents parmi lesquels deux câbles sont bloqués par un organe d'ancrage **80** configuré pour occuper au moins partiellement une portion de la partie intermédiaire **73** correspondante. Parmi ces trois câbles l'élément de blocage présente un câble central **4"** et deux câbles latéraux **4.**

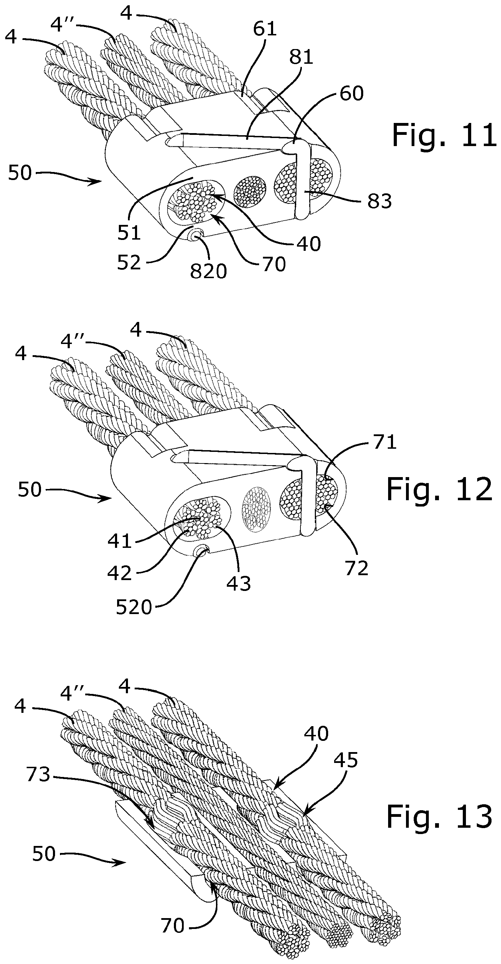

Le câble central **4"** traverse l'élément de blocage **50** longitudinalement et est fixé à demeure dans l'orifice qu'il traverse par tout moyen tel qu'un collage, soudage ou bien un moulage de l'élément de blocage **50** métallique directement sur le câble. Cet orifice central débouchant de part et d'autre de l'élément de blocage **50** peut être de cylindrique (voir la figure 11) ou différente, par exemple ovoïdale (voir la figure 12), mais d'autres formes sont bien entendu possibles (oblongue, etc. ). Les deux câbles latéraux **4** traversent chacun l'élément de blocage **50,** chaque portion **40** de câble **4** correspondante étant logée dans une cavité **70** distincte. Ces trois portions de câbles **4, 4"** s'étendant longitudinalement globalement de manière parallèle deux à deux

De la même manière que dans le premier mode de réalisation, le corps de l'élément de blocage **50** est traversé d'une ouverture d'entrée **50A** à l'autre ouverture de sortie **50B** pour chacune des deux cavités **70** configurées pour recevoir une portion de câble. Le corps de l'élément de blocage **50** est formé par une pièce monobloc, de sorte que les appuis **51, 52** sont formés d'un seul tenant. Chacune de ces cavités **70** est similaire à celle décrite en référence au premier mode de réalisation. Ainsi, chacune des deux cavités **70** recevant une des portions **40** de câbles **4** comporte une partie intermédiaire ou centrale élargie **73,** laquelle est disposée entre, et dans l'alignement, des ouvertures d'entrée **50A** et de sortie **50B** correspondantes. Les parties intermédiaires élargies **73** de chacune des deux cavités **70** sont décalées longitudinalement, c'est-à-dire qu'elles ne sont pas alignées suivant un axe transversal **Y** à l'axe longitudinal **X.** Ceci pour permettre un encombrement plus faible, mais aussi pour permettre une position optimisée de l'organe d'ancrage **80** comme nous allons le voir ci-après.

L'organe d'ancrage **80** est ici un crampon. Le crampon **80** présente une forme générale de « U » avant sa fixation à la bande transporteuse. Un crampon **80** est formé à partir d'une tige monobloc, à savoir d'un seul tenant et de préférence métallique. La tête **81** du crampon **80** est formée à partir d'une partie centrale de la tige monobloc sensiblement rectiligne, laquelle est intercalée entre deux parties latérales de tige formant chacune une portion de tige **83** configurée pour pénétrer chacune dans l'une des deux portions **40** de câbles **4** à bloquer. Chaque tige reliée à la tête **81** par un coude forme en soi un organe d'ancrage **80** pour venir pénétrer dans l'une des deux parties intermédiaires élargies **73** pour créer la déformation **45** de chacune des deux portions **40** de câbles **4** correspondantes et ainsi les bloquer, comme dans le premier mode de réalisation.

Les portions **83** des tiges **80** présentent des pointes **820** à leurs extrémités s'étendant dans leur prolongement opposé à la tête **81** pour faciliter leur introduction chacune à travers l'une deux parties intermédiaires élargies **73,** pour traverser le corps de l'élément de blocage **50** verticalement dans son épaisseur.

D'un côté extérieur de l'élément de blocage **50,** du côté d'un premier appui **51** formant un appui supérieur, l'élément de blocage **50** présente une première interface **510** telle qu'une rainure permettant d'accueillir de manière complémentaire tout ou partie de la tête **81** du crampon **80.** D'un autre côté extérieur de l'élément de blocage **50** du côté d'un deuxième appui **52** formant un appui supérieur, l'élément de blocage **50** présente une deuxième interface **520** telle qu'une rainure ou deux permettant d'accueillir tout ou partie des pointes **820** du crampon **80** qui sont recourbées ou repliées sous l'élément de blocage **50** après leur insertion pour verrouiller la fixation du crampon **80** une fois installé, et assurer ainsi qu'il ne puisse pas se désolidariser durant l'utilisation de la bande transporteuse **1.** Les pointes **820** recourbées du crampon **80** forment donc chacune un tronçon d'ancrage **84** dudit organe d'ancrage **80** assurant l'ancrage dudit crampon **80** sur l'élément de blocage **50** en permettant de faire obstacle à son retrait et verrouiller son assemblage.

Tandis que les portions de tige **83** pénètrent verticalement dans l'une des deux portions **40** de câbles **4** à bloquer, la tête **81** s'étend suivant une composante transversale pour relier les deux câbles **4,** mais en biais, c'est-à-dire avec une certaine inclinaison par rapport à l'axe transversal justifiant également que les parties intermédiaire élargie **73** de chacune des deux cavités sont décalées longitudinalement. En plus de gagner en volume, il ressort d'une telle configuration que, lorsque les efforts de tractions sont appliqués sur les deux câbles **4** distincts dans lequel est ancré le crampon **80,** cela entraîne un effort en rotation du crampon **80** autour d'un axe vertical, ce qui aurait pour effet de contraindre encore plus la déformation du câble vers l'extérieur, bloquant d'autant mieux les câbles **4.**

Les parties intermédiaires élargies **73** de chacune des deux cavités **70** sont intercalées axialement entre deux portions globalement cylindriques complémentaires de l'enveloppe cylindrique de la portion de câble correspondante, voire légèrement plus réduite, ces portions cylindriques formant portions d'ouvertures débouchant chacune axialement sur l'ouverture d'entrée **50A** et respectivement l'ouverture de sortie **50B.** Une section élargie de chaque partie intermédiaire élargie **73** présente une section de dimension plus grande que celle des portions cylindriques qui l'encadrent. Cette augmentation de dimension, ou élargissement, s'étend au moins en partie transversalement par rapport à l'élément de blocage **50,** c'est-à-dire suivant l'axe transversal **Y** perpendiculaire à l'axe longitudinal **X** associé et à un axe **A** vertical de la tige de l'organe d'ancrage **80,** créant ainsi une déformation transversale **45** de la section initialement cylindrique de la portion **40** du câble **4** globalement le long de cet axe transversal **Y,** dans un sens et dans l'autre. On notera que dans certaines variantes possibles, l'axe **A** pourrait ne pas être vertical.

L'élément de blocage **50** comprend en outre dans ce deuxième mode de réalisation, des moyens de serrage **60** pour assurer un serrage des deux appuis **51, 52** l'un par rapport à l'autre. Ces appuis **51, 52** étant ici formés d'un seul tenant, il est pratique de procéder à un sertissage le long de tout ou partie des portions d'extrémités cylindriques de chacune des cavités **70.** Ce sertissage est visible de l'extérieur par une emprunte **61** laissée sur le l'élément de blocage **50** après l'opération de serrage, ici de sertissage.

Un ensemble de tels éléments de blocage **50** peut être utilisé, par exemple, pour former un assemblage de jonction participant à la jonction des portions d'extrémités d'une bande transporteuse. Le câble central **4"** est dans ce cas de préférence un câble de liaison le long duquel plusieurs éléments de blocage sont fixés successivement formant un assemblage longitudinal. Un tel assemblage (non illustré) d'éléments de blocage **50** est configuré dans ce cas pour être rapporté à cheval sur la première portion d'extrémité **11** et la deuxième portion d'extrémité **12** de la bande transporteuse **1,** de sorte à relier une partie au moins des câbles de renfort **4'** de la première portion d'extrémité **11** de la bande transporteuse **1** avec une partie au moins des câbles de renfort **4'** de la deuxième portion d'extrémité **12** de la bande transporteuse **1.**

Dans une telle configuration, le câble central **4"** de chaque élément de blocage est à cheval entre les première et deuxième portion d'extrémité **11, 12,** et les deux câbles latéraux **4,** sont d'un côté longitudinalement de l'assemblage un câble de renfort **4'** de l'une des deux portions d'extrémité **11, 12,** et de l'autre côté longitudinalement de l'assemblage un câble de renfort **4'** de l'autre des deux portions d'extrémité **11, 12.**

La réalisation d'une telle jonction nécessite toutefois le décorticage complet des portions de câbles de renforts constituant les portions d'extrémité **11, 12** de la bande transporteuse **1.** Une fois les câbles reliés il est possible de procéder à une vulcanisation de la jonction de sorte à reformer le corps de la bande transporteuse **1** autour de l'armature reconstituée par la jonction. On notera que la vulcanisation peut aussi être remplacée de préférence par l'utilisation de deux plaques de jonction **101, 102,** et/ou l'utilisation d'une résine coulée. Ces alternatives permettant d'éviter une étape de vulcanisation longue et complexe à mettre en oeuvre.

Pour faciliter la mise en place des éléments de blocage **50,** ceux-ci pourraient être conçus en deux parties distinctes, formant chacune un des deux appuis **51, 52** inférieur et supérieur, telles des mâchoires. Pour assurer le centrage des deux gorges **71, 72** de chacun des appuis **51, 52,** on peut prévoir un élément de liaison rapporté, par exemple une articulation entre les deux appuis garantissant une parfaite superposition des appuis et faciliter la mise en place autour des portions de câbles correspondants.

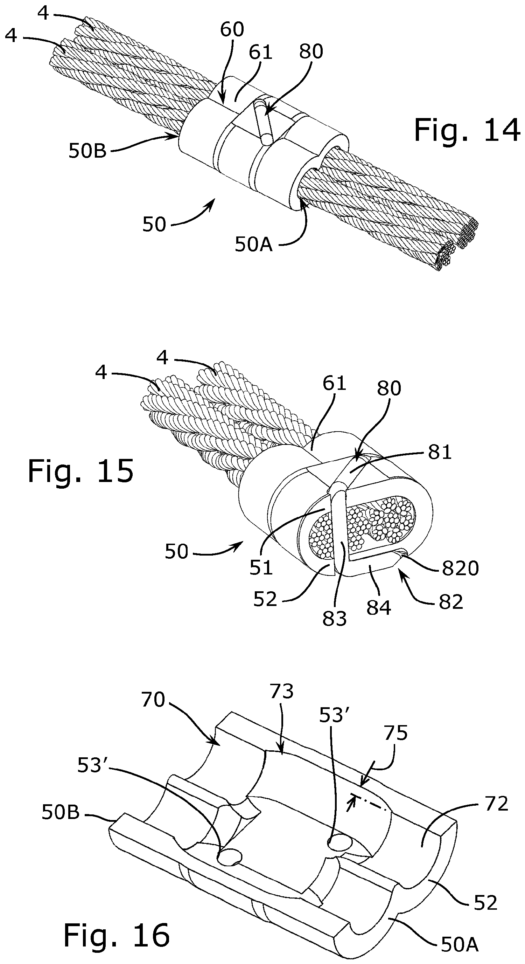

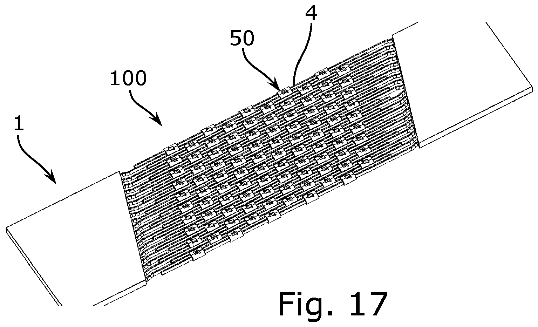

Les figures 14 à 17 illustrent un élément de blocage **50** selon un troisième mode de réalisation qui diffère essentiellement du deuxième mode de réalisation ce qu'il ne présente pas de câble central **4",** et en ce que les deux cavités **70** recevant chacune un câble communiquent l'une avec l'autre de sorte à présenter une seule partie intermédiaire **73** élargie. L'élément de blocage **50** présente la forme d'un manchon monobloc, c'est-à-dire que les appuis **51, 52** sont également formés d'un seul tenant, mais il permet de garantir le blocage de deux portions **40** de câble(s) **4** dans une même cavité **70.**

Dans une telle configuration, les ouvertures d'entrée **50A** et de sortie **50B** communiquent également l'une avec l'autre. Ces ouvertures d'entrée **50A** et de sortie **50B** sont alignées l'une avec l'autre longitudinalement suivant l'axe de référence **X,** et présentent une forme sensiblement complémentaire de la forme des deux câbles, ceci en étant serties de façon similaire au deuxième mode de réalisation.

La partie intermédiaire élargie **73** présente un élargissement **75** centré par rapport à la cavité permettant à chacun des câbles **4** de pouvoir s'étendre, du fait de l'insertion de l'organe d'ancrage **80** à travers sa structure, dans cet espace complémentaire de la déformation ou gonflement local du gabarit de la portion de câble 4 correspondant. L'organe d'ancrage **80** est un crampon similaire à celui décrit en relation avec le deuxième mode de réalisation. Dans cet exemple, la partie intermédiaire **73** élargie étant commune pour les deux câbles **4,** l'élargissement **75** de la cavité **70** est prévu pour un câble **4** donné du côté de la cavité opposé à l'autre câble **4.** Pour des câbles **4** de 8mm de diamètre, traversés chacun sensiblement au milieu par une tige **83** de 2,9 mm de diamètre, chaque câble **4** va présenter un renflement de part et d'autre de la tige **83,** ce renflement étant dirigé globalement transversalement par rapport à l'axe longitudinal de référence **X** de la cavité **70,** dans un sens et dans l'autre. La partie intermédiaire **73** élargie de la cavité **70** est alors configurée pour présenter un élargissement **75** transversal configurée pour y loger le renflement d'un câble d'un côté, et le renflement de l'autre câble de l'autre côté, chaque renflement **75** présentant une dimension correspondant à environ 18 % du diamètre **D** du câble **4** correspondant.

Le crampon **80** présente une tête **81** qui s'étend en biais, c'est-à-dire avec une inclinaison par rapport aux axes des câbles justifiant également que les renflements des deux câbles sont décalés longitudinalement l'un par rapport à l'autre. Le renflement d'un câble vient se loger d'un côté dans élargissement **75** transversal de la partie intermédiaire **73** élargie et, du côté opposé, le renflement se dirige vers l'autre câble, voire vient en contact et en appui contre lui.

Un ensemble de tels éléments de blocage **50** peut être utilisé, par exemple, pour former un assemblage de jonction participant à la jonction des portions d'extrémités d'une bande transporteuse. Dans ce cas, sur les deux câbles bloqués par chaque élément de blocage **50,** l'un des deux est un des câbles de renfort 4 de l'une des deux portions d'extrémité **11, 12,** et l'autre des deux câbles bloqués est un câble de renfort **4' de** l'autre des deux portions d'extrémité **11, 12.** Dans ce mode de réalisation, il n'est pas utilisé de câbles de liaison à cheval sur les deux portions d'extrémité **11, 12** de sorte que les câbles de renfort des portions d'extrémités **11, 12** parfaitement décortiquées viennent s'enchevêtrer dans la jonction **10.** De manière alternée et parallèles entre eux. Les éléments de blocage **50** sont ensuite disposés de manière alternée et en quinconce les uns par rapport aux autres sur l'étendue de l'enchevêtrement des portions de câbles **4',** les éléments de blocage **50** reliant les câbles deux à deux et étant de préférence espacé tous les deux câbles. Chaque paire de câbles est de préférence fixée ensemble par au moins trois, de préférence au moins cinq éléments de blocage **50.** Une fois les câbles reliés sur les portions d'extrémités **11, 12,** il est possible de procéder à une vulcanisation de la jonction de sorte à reformer le corps de la bande transporteuse **1** autour de l'armature reconstituée par la jonction.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Par exemple, il est entendu que d'autres moyens de fixation, moyens de serrage ou organes d'ancrage tels que les vis peuvent être utilisés tout en assurant la même fonction. Par ailleurs, les orientations verticales des moyens de fixation et/ou moyens de serrage et/ou organes d'ancrage peuvent être différentes.

Par ailleurs, est décrit en relation avec les figures un organe d'ancrage **80** formé par une tige rectiligne dont une portion **83** de la tige **80** vient pénétrer dans la partie intermédiaire élargie **73** et traverser localement la cavité **70** radialement à par rapport à l'axe **X** en même temps qu'elle traverse la portion **40** de câble pour créer la déformation lorsqu'une portion **40** de câble **4** est logée dans la cavité **70.** Dans une autre configuration, on peut envisager que cette déformation soit créée sans traverser le câble. La tige peut être dans ce cas rectiligne, de section circulaire ou rectangulaire par exemple et munie d'une pointe **820** présentant un bord biseauté permettant, lors de son introduction, de déplacer localement la portion **40** du câble **4** pour créer la déformation **45.**

S'agissant d'une bande transporteuse, le sens longitudinal est par convention et pour la commodité et la clarté de l'exposé dans l'ensemble de la présente description, le sens longitudinal de la bande transporteuse, et s'applique également au dispositif de jonction considéré tel qu'il doit être monté sur la bande transporteuse. Le sens transversal est le sens perpendiculaire au sens longitudinal ainsi défini, quelles que soient les dimensions du dispositif de jonction considéré isolément.

Dans une configuration particulière, non illustrée dans les figures, les appuis ne sont pas nécessairement monoblocs de sorte que tout ou partie de la cavité peut être formée par au moins une pièce rapportée. Par exemple, une première partie de deux appuis, monoblocs ou non, peut présenter ou délimiter un premier trou traversant présentant une enveloppe cylindrique, donc de diamètre constant, et des embouts complémentaires peuvent être prévu pour se placer aux extrémités longitudinales de ce premier trou traversant en coopérant dedans, ces embouts présentant ou délimitant chacun un deuxième trou traversant délimitant les ouvertures d'entrée et de sortie ainsi que les portions d'entrée et de sortie. La partie intermédiaire élargie serait alors délimitée longitudinalement entre ces embouts et présenterait un diamètre intérieure correspondant au diamètre du premier trou.

Les appuis peuvent enserrer la ou les portion(s) de câble(s) directement comme cela est visible sur les figures ou également enserrer indirectement la ou les portion(s) de câble(s). C'est le cas par exemple si une pièce intermédiaire, par exemple en plastique, est placée entre la gorge de l'un au moins des appuis métalliques et recevant la portion de câble. Une telle pièce en plastique pourrait être utilisée comme consommable pour préserver l'usure de l'élément de blocage tout en permettant de varier le coefficient de frottement. La pièce rapportée pourrait être changée selon l'usure.

Le ou les câble(s), de liaison et/ou de renfort peut(peuvent) également comporter seulement des torons, sans nécessairement comporter d'âme. De manière générale comprennent des faisceaux de fils torsadés. De préférence les cables sont métalliques, c'est-à-dire constitués de fils métaliques.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Dispositif de jonction (100) d'au moins une bande transporteuse (1) du type s'étendant suivant un axe longitudinal (X') et comprenant un corps (2) en matériau flexible à l'intérieur duquel est logé un renfort (3) comprenant des câbles (4') de renfort s'étendant au moins en partie axialement, le dispositif de jonction (100) étant destiné à relier au moins une première (11) et une deuxième (12) portions d'extrémités de la bande transporteuse (1), le dispositif de jonction (100) comprenant au moins un assemblage (150) d'au moins deux éléments de blocage (50) reliés entre eux par des moyens d'assemblage, les moyens d'assemblage comprenant au moins un câble (4,4") de liaison, l'assemblage (150) étant destiné à être rapporté sur la première portion d'extrémité (11) et la deuxième portion d'extrémité (12) de la bande transporteuse, de sorte à relier une partie au moins des câbles (4') de renfort de la première portion d'extrémité (11) de la bande transporteuse (1) avec une partie au moins des câbles (4') de renfort de la deuxième portion d'extrémité (12) de la bande transporteuse (1), chaque élément de blocage (50) de câble comprenant au moins deux appuis (51,52) opposés configurés pour enserrer au moins la portion d'un câble associé parmi les câbles de renfort (4') et le câble de liaison (4, 4"), les appuis (51, 52) présentant chacun au moins une gorge (71, 72) délimitant ensemble au moins une partie d'une cavité (70) traversante pour recevoir au moins la portion (40) du câble (4) associé traversant l'élément de blocage (50) entre une ouverture d'entrée (50A) et une ouverture de sortie (50B) alignées suivant un axe de référence (X), la cavité (70) comportant une partie intermédiaire élargie (73), entre des portions d'ouvertures d'entrée (50A) et de sortie (50B), élargie radialement par rapport à la portion d'ouverture d'entrée (50A) et à la portion d'ouverture de sortie (50B), l'élément de blocage (50) comprenant au moins un organe d'ancrage (80) configuré pour occuper au moins partiellement une portion de la partie intermédiaire (73) élargie de la cavité (70) située dans l'alignement des ouvertures d'entrée et de sortie (50A, 50B), de sorte à créer localement une déformation radiale (45) de la section de la portion (40) du câble associé.

2. Dispositif de jonction (100) selon la revendication 1, **caractérisé en ce qu'**il comprend au moins deux plaques de jonction (101, 102) configurées pour recouvrir chacune un côté distinct des portions d'extrémités (11, 12) de la bande transporteuse (1) de sorte que les portions d'extrémités (11, 12) de la bande transporteuse (1) soient disposées chacune entre les deux plaques de jonction (101, 102), les plaques de jonction (101, 102) étant fixées ensemble par des moyens de fixation (110) agencés pour traverser respectivement une plaque de jonction, une des extrémités de la bande transporteuse (1) puis l'autre plaque de jonction, chaque plaque de jonction (101, 102) étant réalisée en une matière souple et élastique et comprenant les assemblages (150) d'éléments de blocage, de préférence noyés au moins en partie dans la matière souple et élastique de la plaque de jonction (101, 102) correspondante.

3. Dispositif de jonction (100) selon la revendication 1 ou 2, **caractérisé en ce que** le dispositif de jonction comprend au moins :
- un assemblage (150) longitudinal supérieur d'au moins deux éléments de blocage (50) supérieurs parmi les éléments de blocage (50), reliés ensemble par un câble de liaison supérieur parmi les câbles de liaison pour chevaucher les deux extrémités desdits câbles (4') de renfort à relier, et
- un assemblage (150) longitudinal inférieur d'au moins deux éléments de blocage (50) inférieurs parmi les éléments de blocage, reliés ensemble par un câble de liaison inférieur parmi les câbles de liaison pour chevaucher les deux extrémités desdits câbles (4') de renfort à relier,
les éléments de blocage supérieur de l'assemblage longitudinal supérieur étant conformés pour être assemblés avec les éléments de blocage inférieur de l'assemblage longitudinal inférieur en formant ensemble un assemblage de jonction (150'), et pour enserrer une partie au moins des câbles (4') de renfort de la première portion d'extrémité (11) de la bande transporteuse (1) et une partie au moins des câbles (4') de renfort de la deuxième portion d'extrémité (12) de la bande transporteuse (1), le dispositif de jonction (100) comprenant de préférence une pluralité d'assemblages de jonction (150') disposés parallèlement les uns par rapport aux autres et configurés pour être répartis de façon régulière sur la jonction (10).

4. Dispositif de jonction (100) selon la revendication 3, **caractérisé en ce que** certains des moyens d'assemblage sont constitués par certains des moyens de fixation (110), qui sont agencés pour traverser respectivement une plaque de jonction, une des extrémités de la bande transporteuse (1) puis l'autre plaque de jonction.

5. Dispositif de jonction (100) selon la revendication 3 ou la revendication 4, **caractérisé en ce que** dans une position enserrée des câbles (4') de renfort de la première portion d'extrémité (11) et de la deuxième portion d'extrémité (12), les câbles de renfort (4') sont disposés de manières parallèles entre eux, et parallèles à l'axe longitudinal de référence (X) des portions (40) de câbles de liaison (4) bloquées avec leur élément de blocage (50) correspondant.

6. Dispositif de jonction (100) selon l'une quelconque des revendications précédentes, **caractérisé en ce que** des pièces d'appui (51, 52) de l'élément de blocage (50) sont configurées pour enserrer au moins la portion d'un premier câble parmi les câbles de renfort et le câble de liaison, l'élément de blocage (50) comportant une gorge (171) délimitant au moins une partie d'une cavité traversante (170) de réception d'un deuxième câble parmi les câbles de renfort et le câble de liaison, la cavité traversante présentant deux ouvertures d'extrémité axiale.

7. Dispositif de jonction (100) selon l'une des revendications précédentes, **caractérisé en ce que** tout ou partie des éléments de blocage (50) comprend au moins un moyen de serrage (60) pour assurer un serrage des deux appuis (51, 52) l'un par rapport à l'autre, le moyen de serrage (60) comprenant de préférence au moins une vis et/ou un crampon et/ou un rivet et/ou un sertissage.

8. Dispositif de jonction (100) selon la revendication précédente, **caractérisé en ce que** le moyen de serrage (60) comprend l'organe d'ancrage (80) de sorte que l'organe d'ancrage (80) participe au serrage des deux appuis (51, 52) l'un par rapport à l'autre.

9. Dispositif de jonction (100) selon l'une quelconque des revendications précédentes, **caractérisé en ce que** les appuis (51, 52) de certains au moins des éléments de blocage sont formés d'un seul tenant.

10. Dispositif de jonction (100) selon l'une quelconque des revendications précédentes, **caractérisé en ce que** l'organe d'ancrage (80) de certains au moins des éléments de blocage comprend une portion de tige (83) configurée pour pénétrer dans la portion (40) du câble (4), l'organe d'ancrage (80) comprenant de préférence au moins un crampon et/ou une vis et/ou un rivet et/ou un pion.

11. Dispositif de jonction (100) selon l'une quelconque des revendications précédentes, **caractérisé en ce que** la portion (40) du câble associé comporte une structure du type comprenant des fils (43), l'organe d'ancrage (80) de certains au moins des éléments de blocage comprenant une extrémité distale (82), opposée à une tête (81), munie d'une pointe (820) de sorte à pénétrer au moins en partie dans le câble associé en séparant les fils (43) de la structure du câble associé.

12. Dispositif de jonction (100) selon l'une quelconque des revendications précédentes, **caractérisé en ce qu'**au moins un premier des deux appuis (51, 52) de certains au moins des éléments de blocage comporte au moins un trou traversant (53) débouchant dans la partie intermédiaire (73) élargie de la cavité (70) pour permettre à l'organe d'ancrage (80) de pénétrer dans la partie intermédiaire (73) élargie de la cavité (70).

13. Dispositif de jonction (100) selon la revendication 12, **caractérisé en ce que** le premier des deux appuis (51, 52) comporte au moins une première interface (510), par exemple une cuvette ou fraisure, apte à loger une tête (81) de l'un des organes d'ancrage (80), et **en ce qu'**un deuxième des deux appuis (51, 52) comporte au moins une deuxième interface (520) avec laquelle est apte à coopérer un tronçon d'ancrage (84) dudit organe d'ancrage, par exemple un taraudage.

14. Dispositif de jonction (100) selon l'une quelconque des revendications précédentes, **caractérisé en ce que** les portions d'ouverture d'entrée (50A) et/ou d'ouverture de sortie (50B) de certains au moins des éléments de blocage présente(nt) localement un rétrécissement de section, configuré de préférence de sorte que ce rétrécissement présente un diamètre (d) strictement inférieur au diamètre (D) d'une enveloppe cylindrique du câble (4) associé.

15. Dispositif de jonction (100) selon l'une quelconque des revendications précédentes, **caractérisé en ce que** la partie intermédiaire (73) élargie de la cavité (70) de certains au moins des éléments de blocage présente un élargissement radial (75) dans un plan orthogonal (P) à un axe (A) d'une portion de tige (83) de l'organe d'ancrage (80) configurée pour pénétrer dans le câble associé, l'élargissement radial (75) étant de préférence supérieur ou égal à 10%, de préférence encore supérieur ou égal à 25% d'un diamètre (D) du câble associé, et de préférence inférieur ou égal à 50%, de préférence encore inférieur à 40% du diamètre (D) du câble associé, de chaque côté par rapport à la cavité (70).

16. Dispositif de jonction (100) selon l'une quelconque des revendications précédentes, **caractérisé en ce que** les portions d'ouvertures d'entrée et de sortie (50A, 50B) de la cavité (70) de certains au moins des éléments de blocage recevant le câble présentent une forme délimitant en partie une enveloppe cylindrique configurée pour coopérer avec une enveloppe cylindrique du câble associé, les portions d'ouvertures d'entrée et de sortie (50A, 50B) de la cavité (70) s'étendant chacune axialement suivant une longueur (l_{520A}, l_{50B}) supérieure ou égale à la longueur axiale (L₇₃) de la partie intermédiaire (73) élargie de la cavité (70).

17. Dispositif de jonction (100) selon l'une quelconque des revendication 1, **caractérisé en ce que** chaque élément de blocage permet d'assurer la fixation de trois portions de câbles différents s'étendant longitudinalement globalement de manière parallèle deux, à deux parmi lesquels un câble central (4") formant câble de liaison traverse l'élément de blocage (50) longitudinalement et deux câbles de renfort (4') pour être bloqués par un organe d'ancrage (80) configuré pour occuper au moins partiellement une portion de la partie intermédiaire (73) correspondante.

18. Jonction (10) de bande transporteuse (1) s'étendant suivant un axe longitudinal (X') comprenant un corps (2) en matériau flexible à l'intérieur duquel est logé un renfort (3) comprenant des câbles (4') de renfort s'étendant au moins en partie axialement, la bande transporteuse (1) comportant une première (11) et une deuxième (12) portions d'extrémités reliées ensemble par un dispositif de jonction (100) selon l'une quelconque des revendications précédente, au moins un assemblage (150) étant rapporté sur la première portion d'extrémité (11) et la deuxième portion d'extrémité (12) de la bande transporteuse (1), de sorte à relier une partie au moins des câbles de renfort (4') de la première portion d'extrémité (11) de la bande transporteuse (1) avec une partie au moins des câbles de renfort (4') de la deuxième portion d'extrémité (12) de la bande transporteuse (1).

19. Procédé de fabrication d'une jonction (10) de bande transporteuse (1) selon la revendication précédente, **caractérisé en ce qu'**il comporte au moins les étapes suivantes :
- décorticage d'une partie supérieure et d'une partie inférieure du corps (2) de la bande transporteuse au niveau de la première portion d'extrémité (11) et de la deuxième portion d'extrémité (12) de la bande transporteuse (1) ;
- mise en place d'au moins un assemblage (150) d'éléments de blocage (50) de sorte à relier une partie au moins des câbles (4') de renfort de la première portion d'extrémité (11) de la bande transporteuse (1) avec une partie au moins des câbles (4') de renfort de la deuxième portion d'extrémité (12) de la bande transporteuse (1).

20. Procédé de fabrication selon la revendication précédente, **caractérisé en ce qu'**il comprend au moins une étape de mise en place d'au moins deux plaques de jonction (101, 102) recouvrant chacune un côté distinct des première et deuxième portions d'extrémités (11, 12) de la bande transporteuse (1) de sorte que les première et deuxième portions d'extrémités (11, 12) de ladite bande transporteuse (1) soient disposées entre les deux plaques de jonction (101, 102), les plaques de jonction (101, 102) étant formées de préférence en matériau vulcanisable, l'étape de mise en place des plaques de jonction (101, 102) étant de préférence concomitante avec l'étape de mise en place d'au moins un assemblage (150) d'éléments de blocage (50) .

## Patentansprüche

1. Verbindungsvorrichtung (100) für mindestens ein Transportband (1) des Typs, der sich entlang einer Längsachse (X') erstreckt und einen Körper (2) aus flexiblem Material umfasst, in dessen Innerem eine Verstärkung (3) untergebracht ist, umfassend Verstärkungskabel (4'), die sich mindestens teilweise axial erstrecken, wobei die Verbindungsvorrichtung (100) dafür bestimmt ist, mindestens einen ersten (11) und einen zweiten Endabschnitt (12) des Transportbandes (1) aneinander zu befestigen, die Verbindungsvorrichtung (100) umfassend mindestens eine Anordnung (150) von mindestens zwei Blockierelementen (50), die durch Anordnungsmittel gegenseitig aneinander befestigt sind, die Anordnungsmittel umfassend mindestens ein Anschlusskabel (4, 4"), wobei die Anordnung (150) dafür bestimmt ist, an mindestens dem ersten Endabschnitt (11) und dem zweiten Endabschnitt (12) des Transportbandes angebracht zu werden, um einen Teil mindestens der Verstärkungskabel (4') des ersten Endabschnitts (11) des Transportbandes (1) an einem Teil mindestens der Verstärkungskabel (4') des zweiten Endabschnitts (12) des Transportbandes (1) zu befestigen, jedes Kabelblockierelement (50) umfassend mindestens zwei gegenüberliegende Auflagen (51, 52), die zum Umschließen mindestens des Abschnitts eines zugeordneten Kabels unter den Verstärkungskabeln (4') und dem Anschlusskabel (4, 4") konfiguriert sind, wobei die Auflagen (51, 52) jeweils mindestens eine Nut (71, 72) vorweisen, die gemeinsam mindestens einen Teil eines traversierenden Hohlraums (70) zum Aufnehmen mindestens des Abschnitts (40) des zugeordneten Kabels (4) begrenzen, der das Blockierelement (50) zwischen einer Eingangsöffnung (50A) und einer Ausgangsöffnung (50B) traversiert, die entlang einer Referenzachse (X) ausgerichtet sind, wobei der Hohlraum (70) einen verbreiterten Zwischenteil (73) zwischen dem Eingangs- (50A) und dem Ausgangsöffnungsabschnitt (50B) aufweist, der relativ zu dem Eingangsöffnungsabschnitt (50A) und zu dem Ausgangsöffnungsabschnitt (50B) radial verbreitert ist, das Blockierelement (50) umfassend mindestens ein Verankerungsorgan (80), das zum Einnehmen mindestens teilweise eines Abschnitts des verbreiterten Zwischenteils (73) des Hohlraums (70) konfiguriert ist, der in der Ausrichtung der Eingangs- und der Ausgangsöffnung (50A, 50B) gelegen ist, um eine radiale Verformung (45) des Querschnitts des Abschnitts (40) des zugeordneten Kabels lokal zu erzeugen.

2. Verbindungsvorrichtung (100) nach Anspruch 1, **dadurch gekennzeichnet, dass** sie mindestens zwei Verbindungsplatten (101, 102) umfasst, die zum Abdecken jeweils einer getrennten Seite der Endabschnitte (11, 12) des Transportbandes (1) konfiguriert sind, sodass die Endabschnitte (11, 12) des Transportbandes (1) jeweils zwischen den zwei Verbindungsplatten (101, 102) eingerichtet sind, wobei die Verbindungsplatten (101, 102) durch Fixiermittel (110) gemeinsam fixiert sind, die zum Traversieren jeweils einer Verbindungsplatte, eines der Enden des Transportbandes (1), dann der anderen Verbindungsplatte gestaltet sind, wobei jede Verbindungsplatte (101, 102) aus einem weichen und elastischen Material hergestellt ist und die Blockierelementanordnungen (150) umfasst, die vorzugsweise mindestens teilweise in dem weichen und elastischen Material der entsprechenden Verbindungsplatte (101, 102) eingebettet sind.

3. Verbindungsvorrichtung (100) nach Anspruch 1 oder 2, **dadurch gekennzeichnet, dass** die Verbindungsvorrichtung mindestens umfasst:
- eine obere Längsanordnung (150) von mindestens zwei oberen Blockierelementen (50) unter den Blockierelementen (50), die durch ein oberes Anschlusskabel unter den Anschlusskabeln zum Überlappen der zwei Enden der aneinander zu befestigenden Verstärkungskabel (4') gemeinsam aneinander befestigt sind, und
- eine untere Längsanordnung (150) von mindestens zwei unteren Blockierelementen (50) unter den Blockierelementen, die durch ein unteres Anschlusskabel unter den Anschlusskabeln zum Überlappen der zwei Enden der aneinander zu befestigenden Verstärkungskabel (4') gemeinsam aneinander befestigt sind,
wobei die oberen Blockierelemente der oberen Längsanordnung zum Angeordnetwerden mit den unteren Blockierelementen der unteren Längsanordnung, wobei sie gemeinsam eine Verbindungsanordnung (150') ausbilden, und zum Umschließen eines Teils mindestens der Verstärkungskabel (4') des ersten Endabschnitts (11) des Transportbandes (1) und eines Teils mindestens der Verstärkungskabel (4') des zweiten Endabschnitts (12) des Transportbandes (1) angepasst sind, die Verbindungsvorrichtung (100) umfassend vorzugsweise eine Vielzahl von Verbindungsanordnungen (150'), die parallel zueinander eingerichtet und zum Verteiltwerden auf gleichmäßige Weise über die Verbindung (10) konfiguriert sind.

4. Verbindungsvorrichtung (100) nach Anspruch 3, **dadurch gekennzeichnet, dass** einige der Anordnungsmittel aus einigen der Fixiermittel (110) bestehen, die zum Traversieren jeweils einer Verbindungsplatte, eines der Enden des Transportbandes (1), dann der anderen Verbindungsplatte gestaltet sind.

5. Verbindungsvorrichtung (100) nach Anspruch 3 oder 4, **dadurch gekennzeichnet, dass** in einer umschlossenen Position der Verstärkungskabel (4') des ersten Endabschnitts (11) und des zweiten Endabschnitts (12) die Verstärkungskabel (4') auf zueinander parallele Arten und parallel zu der Bezugslängsachse (X) der Abschnitte (40) der Anschlusskabel (4) eingerichtet sind, die mit ihrem entsprechenden Blockierelement (50) blockiert sind.

6. Verbindungsvorrichtung (100) nach einem der vorstehenden Ansprüche, **dadurch gekennzeichnet, dass** Auflagestücke (51, 52) des Blockierelements (50) zum Umschließen mindestens des Abschnitts eines ersten Kabels unter den Verstärkungskabeln und dem Anschlusskabel konfiguriert sind, wobei das Blockierelement (50) eine Nut (171) aufweist, die mindestens einen Teil eines traversierenden Hohlraums (170) zum Aufnehmen eines zweiten Kabels unter den Verstärkungskabeln und dem Anschlusskabel begrenzt, wobei der traversierende Hohlraum zwei axiale Endöffnungen vorweist.

7. Verbindungsvorrichtung (100) nach einem der vorstehenden Ansprüche, **dadurch gekennzeichnet, dass** alle oder ein Teil der Blockierelemente (50) mindestens ein Klemmmittel (60) zum Gewährleisten eines Festklemmens der zwei Auflagen (51, 52) relativ zueinander umfassen, das Klemmmittel (60) umfassend vorzugsweise mindestens eine Schraube und/oder eine Krampe und/oder eine Niete und/oder eine Crimpverbindung.

8. Verbindungsvorrichtung (100) nach dem vorstehenden Anspruch, **dadurch gekennzeichnet, dass** das Klemmmittel (60) das Verankerungsorgan (80) umfasst, sodass das Verankerungsorgan (80) an dem Festklemmen der zwei Auflagen (51, 52) relativ zueinander beteiligt ist.

9. Verbindungsvorrichtung (100) nach einem der vorstehenden Ansprüche, **dadurch gekennzeichnet, dass** die Auflagen (51, 52) von einigen von mindestens der Blockierelemente zusammenhängend ausgebildet sind.

10. Verbindungsvorrichtung (100) nach einem der vorstehenden Ansprüche, **dadurch gekennzeichnet, dass** das Verankerungselement (80) von einigen mindestens der Blockierelemente einen Schaftabschnitt (83) umfasst, der zum Eindringen in den Abschnitt (40) des Kabels (4) konfiguriert ist, das Verankerungselement (80) umfassend vorzugsweise mindestens eine Krampe und/oder eine Schraube und/oder eine Niete und/oder einen Stift.

11. Verbindungsvorrichtung (100) nach einem der vorstehenden Ansprüche, **dadurch gekennzeichnet, dass** der Abschnitt (40) des zugeordneten Kabels eine Struktur des Typs aufweist, umfassend Drähte (43), das Verankerungsorgan (80) von einigen mindestens der Blockierelemente umfassend ein distales Ende (82), das einem Kopf (81) gegenüberliegt, das mit einer Spitze (820) versehen ist, sodass es mindestens teilweise in das zugeordnete Kabel eindringt, wobei die Drähte (43) von der Struktur des zugeordneten Kabels abgetrennt werden.

12. Verbindungsvorrichtung (100) nach einem der vorstehenden Ansprüche, **dadurch gekennzeichnet, dass** mindestens eine erste der zwei Auflagen (51, 52) von einigen mindestens der Blockierelemente mindestens ein traversierendes Loch (53) aufweist, das zum Ermöglichen, dass das Verankerungsorgan (80) in den verbreiterten Zwischenteil (73) des Hohlraums (70) eindringt, in den verbreiterten Zwischenteil (73) des Hohlraums (70) mündet.

13. Verbindungsvorrichtung (100) nach Anspruch 12, **dadurch gekennzeichnet, dass** die erste der zwei Auflagen (51, 52) mindestens eine erste Schnittstelle (510), zum Beispiel eine Mulde oder eine Ausfräsung, aufweist, die geeignet ist, einen Kopf (81) eines der Verankerungsorgane (80) unterzubringen, und **dass** eine zweite der zwei Auflagen (51, 52) mindestens eine zweite Schnittstelle (520) aufweist, mit der ein Verankerungsteilstück (84) des Verankerungsorgans geeignet ist, zusammenzuwirken, zum Beispiel ein Innengewinde.

14. Verbindungsvorrichtung (100) nach einem der vorstehenden Ansprüche, **dadurch gekennzeichnet, dass** der Eingangsöffnungs- (50A) und/oder der Ausgangsöffnungsabschnitt (50B) von einigen mindestens der Blockierelemente eine Querschnittsverengung lokal vorweist/vorweisen, die vorzugsweise konfiguriert ist, sodass diese Verengung einen Durchmesser (d) vorweist, der strikt kleiner als der Durchmesser (D) einer zylindrischen Hülle des zugeordneten Kabels (4) ist.

15. Verbindungsvorrichtung (100) nach einem der vorstehenden Ansprüche, **dadurch gekennzeichnet, dass** der verbreiterte Zwischenteil (73) des Hohlraums (70) von einigen mindestens der Blockierelemente eine radiale Verbreiterung (75) in einer Ebene (P) orthogonal zu einer Achse (A) eines Schaftabschnitts (83) des Verankerungselements (80) vorweist, das zum Eindringen in das zugeordnete Kabel konfiguriert ist, wobei die radiale Verbreiterung (75) vorzugsweise größer als oder gleich 10 %, mehr bevorzugt größer als oder gleich 25 %, eines Durchmessers (D) des zugeordneten Kabels und vorzugsweise kleiner als oder gleich 50 %, mehr bevorzugt kleiner als 40 %, des Durchmessers (D) des zugeordneten Kabels auf jeder Seite relativ zu dem Hohlraum (70) ist.

16. Verbindungsvorrichtung (100) nach einem der vorstehenden Ansprüche, **dadurch gekennzeichnet, dass** der Eingangs- und der Ausgangsöffnungsabschnitt (50A, 50B) des Hohlraums (70) von einigen mindestens der Blockierelemente, die das Kabel aufnehmen, eine Form vorweisen, die teilweise eine zylindrische Hülle begrenzt, die zum Zusammenwirken mit einer zylindrischen Hülle des zugeordneten Kabels konfiguriert ist, wobei sich der Eingangs- und der Ausgangsöffnungsabschnitt (50A, 50B) des Hohlraums (70) jeweils axial entlang einer Länge (l_{50A}, l_{50B}) erstrecken, die größer als oder gleich der axialen Länge (L₇₃) des verbreiterten Zwischenteils (73) des Hohlraums (70) ist.

17. Verbindungsvorrichtung (100) nach einem der Ansprüche 1, **dadurch gekennzeichnet, dass** jedes Blockierelement das Fixieren von drei verschiedenen Kabelabschnitten ermöglicht, die sich in Längsrichtung insgesamt auf zueinander parallele Art paarweise erstrecken, unter denen ein zentrales Kabel (4"), das ein Anschlusskabel ausbildet, das Blockierelement (50) in Längsrichtung und zwei Verstärkungskabel (4') zum Blockiertwerden durch ein Verankerungsorgan (80) traversiert, das zum Einnehmen mindestens teilweise eines Abschnitts des entsprechenden Zwischenteils (73) konfiguriert ist.

18. Verbindung (10) eines Transportbandes (1), das sich entlang einer Längsachse (X') erstreckt, umfassend einen Körper (2) aus flexiblem Material, in dessen Innerem eine Verstärkung (3) untergebracht ist, umfassend Verstärkungskabel (4'), die sich mindestens teilweise axial erstrecken, wobei das Transportband (1) einen ersten (11) und einen zweiten (12) Endabschnitt umfasst, die durch eine Verbindungsvorrichtung (100) nach einem der vorstehenden Ansprüche gemeinsam aneinander befestigt sind, wobei mindestens eine Anordnung (150) an dem ersten Endabschnitt (11) und dem zweiten Endabschnitt (12) des Transportbandes (1) angebracht ist, sodass ein Teil mindestens der Verstärkungskabel (4') des ersten Endabschnitts (11) des Transportbandes (1) mit mindestens einem Teil der Verstärkungskabel (4') des zweiten Endabschnitts (12) des Transportbandes (1) aneinander befestigt wird.

19. Verfahren zum Anfertigen einer Verbindung (10) eines Transportbandes (1) nach dem vorstehenden Anspruch, **dadurch gekennzeichnet, dass** es mindestens die folgenden Schritte umfasst:
- Schälen eines oberen und eines unteren Teils des Transportbandkörpers (2) an dem ersten Endabschnitt (11) und an dem zweiten Endabschnitt (12) des Transportbandes (1);
- Installieren von mindestens einer Anordnung (150) von Blockierelementen (50), um einen Teil mindestens der Verstärkungskabel (4') des ersten Endabschnitts (11) des Transportbandes (1) an mindestens einem Teil der Verstärkungskabel (4') des zweiten Endabschnitts (12) des Transportbandes (1) zu befestigen.

20. Anfertigungsverfahren nach dem vorstehenden Anspruch, **dadurch gekennzeichnet, dass** es mindestens einen Schritt des Installierens von mindestens zwei Verbindungsplatten (101, 102) umfasst, die jeweils eine getrennte Seite des ersten und des zweiten Endabschnitts (11, 12) des Transportbandes (1) abdecken, sodass der erste und der zweite Endabschnitt (11, 12) des Transportbandes (1) zwischen den zwei Verbindungsplatten (101, 102) eingerichtet sind, wobei die Verbindungsplatten (101, 102) vorzugsweise aus vulkanisierbarem Material ausgebildet sind, wobei der Schritt des Installierens der Verbindungsplatten (101, 102) vorzugsweise mit dem Schritt des Installierens mindestens einer Anordnung (150) von Blockierelementen (50) zusammenfällt.

## Claims

1. Device (100) for joining at least one conveyor belt (1) which extends along a longitudinal axis (X') and comprises a body (2) which is made of flexible material and inside which is housed a reinforcement (3) comprising reinforcing cables (4') which extend at least partly axially, the joining device (100) being intended to connect at least a first end portion (11) and a second end portion (12) of the conveyor belt (1), the joining device (100) comprising at least one assembly (150) of at least two locking elements (50) which are connected to one another by assembly means, the assembly means comprising at least one connecting cable (4, 4"), the assembly (150) being intended to be attached to the first end portion (11) and the second end portion (12) of the conveyor belt so as to connect at least part of the reinforcing cables (4') of the first end portion (11) of the conveyor belt (1) with at least part of the reinforcing cables (4') of the second end portion (12) of the conveyor belt (1), each cable locking element (50) comprising at least two opposite supports (51, 52) which are configured to grip at least the portion of an associated cable from the reinforcing cables (4') and the connecting cable (4, 4"), the supports (51, 52) each having at least one groove (71, 72) which together delimits at least part of a through-cavity (70) for receiving at least the portion (40) of the associated cable (4) which passes through the locking element (50) between an inlet opening (50A) and an outlet opening (50B) which are aligned along a reference axis (X), the cavity (70) comprising an enlarged intermediate part (73) between portions of inlet opening (50A) and outlet opening (50B), which intermediate part is enlarged radially relative to the inlet opening portion (50A) and to the outlet opening portion (50B), the locking element (50) comprising at least one anchoring member (80) which is configured to at least partly occupy a portion of the enlarged intermediate part (73) of the cavity (70) which is located in the alignment of the inlet and outlet openings (50A, 50B) so as to locally create a radial deformation (45) of the cross-section of the portion (40) of the associated cable.

2. Joining device (100) according to claim 1, **characterized in that** it comprises at least two joining plates (101, 102) which are configured to each cover a distinct side of the end portions (11, 12) of the conveyor belt (1) so that the end portions (11, 12) of the conveyor belt (1) are each arranged between the two joining plates (101, 102), the joining plates (101, 102) being fixed to one another by fixing means (110) which are arranged to each pass through one joining plate, then one of the ends of the conveyor belt (1) and then the other joining plate, each joining plate (101, 102) being made of a flexible and elastic material and comprising the assemblies (150) of locking elements which are preferably embedded at least partly in the flexible and elastic material of the corresponding joining plate (101, 102).

3. Joining device (100) according to claim 1 or claim 2, **characterized in that** the joining device comprises at least:
- an upper longitudinal assembly (150) of at least two upper locking elements (50) from the locking elements (50), which are connected to one another by an upper connecting cable from the connecting cables in order to overlap the two ends of the reinforcing cables (4') to be connected, and
- a lower longitudinal assembly (150) of at least two lower locking elements (50) from the locking elements, which are connected to one another by a lower connecting cable from the connecting cables in order to overlap the two ends of the reinforcing cables (4') to be connected,
the upper locking elements of the upper longitudinal assembly being shaped to be assembled with the lower locking elements of the lower longitudinal assembly by together forming a joining assembly (150'), and to grip at least part of the reinforcing cables (4') of the first end portion (11) of the conveyor belt (1) and at least part of the reinforcing cables (4') of the second end portion (12) of the conveyor belt (1), the joining device (100) preferably comprising a plurality of joining assemblies (150') which are parallel to one another and are configured to be evenly distributed over the join (10).

4. Joining device (100) according to claim 3, **characterized in that** some of the assembly means consist of some of the fixing means (110), which are arranged to each pass through a joining plate, one of the ends of the conveyor belt (1) and then the other joining plate.

5. Joining device (100) according to claim 3 or claim 4, **characterized in that,** in a gripped position of the reinforcing cables (4') of the first end portion (11) and the second end portion (12), the reinforcing cables (4') are parallel to one another and parallel to the longitudinal reference axis (X) of the portions (40) of the connecting cables (4) which are locked using their corresponding locking element (50).

6. Joining device (100) according to any of the preceding claims, **characterized in that** support parts (51, 52) of the locking element (50) are configured to grip at least the portion of a first cable from the reinforcing cables and the connecting cable, the locking element (50) comprising a groove (171) which delimits at least part of a through-cavity (170) for receiving a second cable from the reinforcing cables and the connecting cable, the through-cavity having two axial end openings.

7. Joining device (100) according to any of the preceding claims, **characterized in that** all or part of the locking elements (50) comprises at least one clamping means (60) for ensuring that the two supports (51, 52) are clamped relative to one another, the clamping means (60) preferably comprising at least one screw and/or clip and/or rivet and/or crimp connection.

8. Joining device (100) according to the preceding claim, **characterized in that** the clamping means (60) comprises the anchoring member (80) such that the anchoring member (80) participates in the clamping of the two supports (51, 52) relative to one another.

9. Joining device (100) according to any of the preceding claims, **characterized in that** the supports (51, 52) of at least some of the locking elements are formed in one piece.

10. Joining device (100) according to any of the preceding claims, **characterized in that** the anchoring member (80) of at least some of the locking elements comprises a rod portion (83) which is configured to penetrate the portion (40) of the cable (4), the anchoring member (80) preferably comprising at least one clip and/or screw and/or rivet and/or pin.

11. Joining device (100) according to any of the preceding claims, **characterized in that** the portion (40) of the associated cable includes a structure which comprises wires (43), the anchoring member (80) of at least some of the locking elements comprising a distal end (82) which is opposite a head (81) and is provided with a point (820) so as to at least partly penetrate the associated cable by separating the wires (43) from the structure of the associated cable.

12. Joining device (100) according to any of the preceding claims, **characterized in that** at least one first of the two supports (51, 52) of at least some of the locking elements includes at least one through-hole (53) which opens into the enlarged intermediate part (73) of the cavity (70) to allow the anchoring member (80) to penetrate the enlarged intermediate part (73) of the cavity (70).

13. Joining device (100) according to claim 12, **characterized in that** the first of the two supports (51, 52) includes at least one first interface (510), for example a bowl or countersink, which is capable of housing a head (81) of one of the anchoring members (80), and **in that** a second of the two supports (51, 52) includes at least one second interface (520) with which an anchoring portion (84) of the anchoring member, for example an internal screw thread, is capable of cooperating.

14. Joining device (100) according to any of the preceding claims, **characterized in that** the inlet opening portion (50A) and/or outlet opening portion (50B) of at least some of the locking elements locally has/have a narrowing in cross-section, which is preferably configured so that this narrowing has a diameter (d) which is strictly less than the diameter (D) of a cylindrical casing of the associated cable (4).

15. Joining device (100) according to any of the preceding claims, **characterized in that** the enlarged intermediate part (73) of the cavity (70) of at least some of the locking elements has a radial widening (75) in a plane which is orthogonal (P) to an axis (A) of a rod portion (83) of the anchoring member (80) which is configured to penetrate the associated cable, the radial widening (75) preferably being greater than or equal to 10%, more preferably greater than or equal to 25%, of a diameter (D) of the associated cable, and preferably less than or equal to 50%, preferably even less than 40%, of the diameter (D) of the associated cable on each side relative to the cavity (70).

16. Joining device (100) according to any of the preceding claims, **characterized in that** the inlet and outlet opening portions (50A, 50B) of the cavity (70) of at least some of the locking elements which receive the cable have a shape which partly delimits a cylindrical casing which is configured to cooperate with a cylindrical casing of the associated cable, the inlet and outlet opening portions (50A, 50B) of the cavity (70) each extending axially along a length (I_{50A}, I_{50B}) which is greater than or equal to the axial length (L₇₃) of the enlarged intermediate part (73) of the cavity (70).

17. Joining device (100) according to any of claim 1, **characterized in that** each locking element makes it possible to ensure that three portions of different cables which extend longitudinally generally in a parallel manner two are fixed, from which two a central cable (4") forming a connecting cable passes through the locking element (50) longitudinally and two reinforcing cables (4') to be locked by an anchoring member (80) which is configured to at least partly occupy a portion of the corresponding intermediate part (73).

18. Join (10) of a conveyor belt (1) which extends along a longitudinal axis (X') comprising a body (2) which is made of flexible material and inside which is housed a reinforcement (3) comprising reinforcing cables (4') which extend at least partly axially, the conveyor belt (1) comprising a first end portion (11) and a second end portion (12) which are connected to one another by a joining device (100) according to any of the preceding claims, at least one assembly (150) being attached to the first end portion (11) and the second end portion (12) of the conveyor belt (1) so as to connect at least part of the reinforcing cables (4') of the first end portion (11) of the conveyor belt (1) with at least part of the reinforcing cables (4') of the second end portion (12) of the conveyor belt (1).

19. Method for manufacturing a join (10) of a conveyor belt (1) according to the preceding claim, **characterized in that** it comprises at least the following steps:
- shelling an upper part and a lower part of the body (2) of the conveyor belt at the first end portion (11) and the second end portion (12) of the conveyor belt (1);
- installing at least one assembly (150) of locking elements (50) so as to connect at least part of the reinforcing cables (4') of the first end portion (11) of the conveyor belt (1) with at least part of the reinforcing cables (4') of the second end portion (12) of the conveyor belt (1).

20. Manufacturing method according to the preceding claim, **characterized in that** it comprises at least one step of installing at least two joining plates (101, 102) which each cover a distinct side of the first and second end portions (11, 12) of the conveyor belt (1) so that the first and second end portions (11, 12) of the conveyor belt (1) are arranged between the two joining plates (101, 102), the joining plates (101, 102) preferably being formed of vulcanizable material, the step of placing the joining plates (101, 102) preferably being concomitant with the step of installing at least one assembly (150) of locking elements (50).
